# EUROPEAN PATENT APPLICATION

(11) **EP 4 589 514 A1**
(43) Date of publication of application: **23.07.2025**
(21) Application number: 25153195.0
(22) Date of filing: 21.01.2025
(51) Int. Cl.: G06Q 10/10, G06Q 50/18, G06F 40/00, G06N 5/022, G06N 20/00

(54) **SYSTEM AND METHODS FOR ENABLING CONVERSATIONAL MODEL BUILDING TO EXTRACT, CLASSIFY, INFER, OR CALCULATE DATA FROM LARGE CORPUSES OF DOCUMENTS**

(30) Priority: 22.01.2024 US 202463623660 P
(71) Applicant: Workday, Inc., Pleasanton CA 94588 (US)
(72) Inventor: SUSSMAN, Jacob, San Francisco (US); ANOUN, Amine, San Francisco (US); TING, Jerry, San Francisco (US); HAWKINS, Riley, Austin (US); YU, Xinying, Santa Clara (US); FU, Isabella, San Francisco (US); JOHNSON, Andrew, Chicago (US); MAY, David, New York (US)
(74) Representative: Potter Clarkson

(57) **Abstract**

Systems, apparatuses, and methods for enabling a user to formulate and execute a query against a corpus of documents and do so in a computationally efficient and scalable manner.

## Description

### CROSS REFERENCE TO RELATED APPLICATION

This application claims the benefit of US Provisional Application No. 63/623,660, filed January 22, 2024, entitled " System and Methods for Enabling Conversational Model Building to Extract, Classify, Infer, or Calculate Data from Large Corpuses of Documents", the disclosure of which is incorporated, in its entirety (including the Appendix) by this reference.

### BACKGROUND

In many cases, a user, business, or organization enters into multiple forms of agreements or contracts, such as those with employees, suppliers, vendors, customers, service providers, other organizations, or a government entity. These agreements are typically represented by a corpus of documents that include information regarding the terms and conditions, warranties, obligations, or other aspects of an agreement or contract.

When drafting and/or managing these agreements or contracts (e.g., to fulfil an obligation, suggest something to discuss during a re-negotiation, or other task related to the contents of an agreement), a party to an agreement or contract may desire to extract a set of information from the entire corpus or from a portion of it. The extracted information may be represented as data in one or more fields in an agreement or contract, or in a structured record of an agreement or contract.

Since such sets of documents and fields can be quite numerous, this can create a difficulty in executing a query because of the data processing resources or other costs involved. Further, it is desirable that a user who is formulating the query be able to do so in a convenient manner, such as by using a conversational style in an interface to formulate and execute a query.

One approach to providing a conversational interface uses generative AI techniques, which may include use of a prompt input to a trained large language model (LLM). The techniques may assist in forming one or more inputs to the model, which (in some use cases) has been trained to represent information contained in a set of documents.

However, at present it is not possible using a conventional chat interface to get an answer (much less a reliable one) to a query such as "For all my contracts, list out the notice period I need to give to terminate" when the query is applied to a corpus of thousands of documents. This is the case even when using chat tools such as Chat-GPT-4 or combining it with a technique such as Retrieval Augmented Generation (RAG). In such a use case, a typical RAG approach might give a summary answer, or an answer based on a limited number of documents, but it cannot consider and answer the query for every document. And as importantly, it cannot turn its response into data that can be used in one or more commonly desired ways, such as to populate a dashboard, generate a risk classification score, be used by a CRM or ERP solution, initiate an alert, or be exported to Excel, as non-limiting examples. This is at least because it is not providing the answers/responses as a structured (and hence usable) form of data.

An approach using agents also has inherent limitations. In general, using agents may result in a compounded inaccuracy over multiple steps. This can result from a lack of knowing a user's intent or goal with sufficient clarity before executing a search process and data extraction process.

What is desired are systems, apparatuses, and methods for enabling a user to formulate and execute a query against a corpus of documents and do so in a computationally efficient and scalable manner. Embodiments of the disclosure described herein address this and other objectives both individually and collectively.

### SUMMARY

The terms "invention," "the invention," "this invention," "the present invention," "the present disclosure," or "the disclosure" as used herein refer broadly to all subject matter disclosed and/or described in this document, the drawings or figures, and to the claims. Statements containing these terms do not limit the subject matter disclosed or the meaning or scope of the claims. Embodiments covered by this disclosure are defined by the claims and not by this summary. This summary is a high-level overview of various aspects of the disclosure and introduces some of the concepts that are further described in the Detailed Description section below. This summary is not intended to identify key, essential or required features of the claimed subject matter, nor is it intended to be used in isolation to determine the scope of the claimed subject matter. The subject matter should be understood by reference to appropriate portions of the entire specification, to any or all figures or drawings, and to each claim.

This disclosure is directed systems, apparatuses, and methods for enabling a user to formulate and execute a query against a corpus of documents and do so in a convenient, computationally efficient, and scalable manner. In some embodiments, the disclosed and/or described elements, components, processes, or methods that are part of or are executed by a system, platform, or apparatus may provide a user with assistance in formulating a prompt and selecting other parameters or inputs for a large language model (LLM) that has been (or is in a process of being) trained on the user's corpus of documents.

To provide a capability to enable use of conversational querying as an input and applying such a query over a corpus of documents to generate an output of structured data, one or more embodiments of the disclosure (also referred to as "Field Al" or "Document X-Ray" herein), provide a way to implement techniques to extract, calculate, glean, and/or classify information from a document, at scale, and apply that approach to tens of thousands or more documents. In one or more embodiments, this processing flow may be initiated by a simple prompt by the user that expresses in plain English what information they want or what they want to do or know from a document or a corpus of documents. As non-limiting examples, the document or documents may be one of a contract, an agreement, a bill of sale, a service agreement, or an employment agreement.

While helpful and able to provide a response quickly, previous approaches to enabling conversational querying and application of the query to a document do not require some of the features or functionality found in an embodiment of the present disclosure. This is at least because a user can see the answer in (almost) real time and can validate it, which means the accuracy doesn't need to be as high as in cases where a relatively large corpus of documents is being queried. However, for executing a query or search across a larger set of documents where a user can't review all of the answers and data might get processed without being known or considered by other systems, the requirement for accuracy is higher. Similarly, the need for appropriate instructions is also greater because a single question/query is being applied to a diverse set of documents.

Enabling these capabilities or functionalities has encountered several challenges, each of which has been addressed and overcome (resolved) by one or more of the embodiments disclosed and/or described herein:
- The ability to process thousands or more requests to an LLM (large language model);
- Enabling a user to create a prompt/instruction for an LLM that can work at scale based on viewing only a sample of the relevant data/documents;
   ∘ Note that in reality an instruction such as "I want to track X" doesn't anticipate the possible edge cases (and there are almost always edge cases, some of which may be significant), and is typically not sufficient to result in useful output;
- Enabling these functions and capabilities cost effectively given the potentially high cost of using LLMs (whether they are third party or internal - for example, relatively high compute costs or request costs that charge by the token);
- Achieving a desired level of accuracy by using the "best suited" or "most ideal" LLM and the "best suited" or "most ideal" prompt at each stage of the user input and subsequent processing;
   ∘ That is, enabling the selection of an LLM and/or guiding the generation/creation of a prompt in an optimal manner, given applicable or relevant constraints;
   ∘ Another feature or function that increases the accuracy of responding to a user's input is use of optimized RAG settings (# of chunks given to the LLM to read, which part of the doc to read, and size of chunks) which improves accuracy and reduces costs by assisting in selecting the least expensive configuration that still achieves top or acceptable accuracy;
   ∘ A further example of a feature or function that increases the accuracy and scalability of one or more embodiments is a process to assist a user to generate a setting for the model by evaluating the impact of a change to a system prompt, a user instruction, a RAG setting, or a choice or setting for the language model;
- Making the process convenient and accessible for a user by reducing the number of inputs required or changing from an instruction such as "provide input" to something more similar to "review the system's (AI's) interpretation of what you want", thereby reducing the user effort, confusion, and in some cases, the time required;
- Supporting both extracting values from a document when the user desires to find an exact value or calculate a value based on information in the document, and classifying the document or specific parts of the document (e.g., a clause) into categories to organize the information in the document or the document itself. In some cases, this may include inferring an answer to a user question based on analysis of the text (e.g., assigning a risk level if a contract does or doesn't contain certain obligations, if it contains or doesn't contain a feature used in a risk analysis, or calculating and producing a number or value based on numbers or information in a contract or document);
   ∘ A further use of this capability is to calculate a value based on something found in more than a single document. For example, if a first document says "Start date is date of signing of SOW" and the SOW is another doc, then the process flow would pull the two documents together using a mix of RAG and in-platform logic (such as folder locations, file names, other data field outputs (e.g., party names), references in the second document (e.g., "This SOW executed under Master agreement..."), or grouping using the platform grouping features; and
- Standardizing the outputs to match the desired output for the user, even though LLM's may include more words and may not properly follow instructions related to formatting an output.

Although described in the context of contract review, the model building approach disclosed may be utilized and provide benefits for other types or categories of documents, including but not limited to contracts, agreements, invoices, support tickets, employment offers, service agreements, or order forms. Embodiments may be applied to almost any type of text or document, and modifications may be made to enable recognition and interpretation of diagrams as well as LLMs become increasingly multi-modal (where an interface would allow users to tag or identify selections or places in images).

In one embodiment, the disclosure is directed to a method for enabling a user to formulate and execute a query against a corpus of documents and do so in a convenient, computationally efficient, and scalable manner. In one non-limiting use case, the documents may be a set of contracts or similar agreements. In one embodiment, the method may include the following steps, stages, functions, or operations, some of which are used to train a model to execute a desired query:
- Receive a Set of Inputs from a User for Training a Model (e.g., an LLM) - in one embodiment, these inputs may include:
   ∘ What field they want to populate in an output;
   ∘ What documents to run the query against or on; and
   ∘ One or more "instructions" that indicate the task the user is asking the trained LLM to perform (e.g., as expressed by the user in plain English);
      ▪ In some embodiments, the user may be provided with assistance in formulating, selecting, describing, or improving one or more of the above inputs in the form of Al-generated instructions;
         - In one embodiment, the user's input may be processed using natural language processing or understanding (NLP or NLU) techniques such as generating embeddings and clustering to enable interpretation and acting upon the user input;
         - As another example, an LLM might be used to generate instructions based on a set of examples and desired answers provided by users or a field name, and using that information to infer user intent and instructions;
   ∘ Note that one or more of these steps may also be used when inputting a query to a trained model;
- Generate and Present to the User an Evaluation of the Expected Accuracy of a Model Trained Based on the User Provided Inputs;
   ∘ In one embodiment, as part of the evaluation process, a user may be presented with the following:
      ▪ A document (which may be displayed in a preview mode);
      ▪ The system or process flow's output, i.e., what the applied approach thinks the answer to the user's query is;
      ▪ A rating table to allow the user to rate the output/answer as either:
         - Correct, where if chosen, then the system shows them the next document to rate;
         - Incorrect, where if chosen, the user is asked to provide the correct answer and optionally can provide an explanation for why the system's answer was wrong or their answer is better (i.e., more correct). This explanation may be used as part of later generated suggestions and/or as training data;
         - Partially correct, where there are multiple correct responses or data and only one was found, or a correct answer was provided but combined with an incorrect one. These cases may be tracked separately and weighted differently than an incorrect response when determining accuracy; or
         - Skip (e.g., the document may be in a foreign language that the user can't evaluate the accuracy of);
- Assist User to Select a "Better" Prompt and/or "Better" LLM for Use in Creating a Trained Model to be Published;
   ∘ In some embodiments, this may be accomplished by use of one or more of the features or functions of an orchestration layer, as disclosed and/or described herein;
   ∘ In general, this may be performed by backend operations that evaluate the performance of one or more prompts and/or LLMs, and may include specific heuristics or rules;
- Assist the user to generate a setting for the model trained based on the user provided inputs by evaluating an impact of a change to one or more of a system prompt, a user instruction, a RAG setting, or a choice or setting for the language model;
- When Satisfied with a Model's Performance, a User "Publishes" the Model and Executes It Against All (or a portion of) Documents in a Selected Corpus of Documents;
   ∘ Prior to executing the model on a set or corpus of documents, the disclosed and/or described system, platform, or apparatus may execute one or more processes to "improve" a prompt, instruction, or the selection of documents (or other aspect of the inputs to a model) using a technique or techniques disclosed and/or described herein. This is expected to provide improved accuracy and/or scalability of the developed model;
- Extract a Value or Values from Each Document of the Set of Documents in the Corpus Under the Control of the Model;
   ∘ In one embodiment, for a given document, the LLM (model) extracts values from documents using the following process flow:
      ▪ Use retrieval augmented generation (RAG) at the document level to feed into the LLM a prompt (with instructions as part of the prompt) and snippet(s) of the document that are expected to be most relevant and most likely to contain the answer (e.g., based on an embedding derived measure of relevance or another relevant metric);
      ▪ Embodiments may include a step or process stage to create a "profile" for RAG purposes of what embeddings to look for in each document;
         - Then on any given document, the process performs RAG on just that document (so there's no concept of RAG across multiple documents which may cause some docs to be excluded and not evaluated), and examine the most relevant chunks in each document;
      ▪ How RAG is used on each document may vary - e.g. on longer documents, the processing may pull more chunks of text than for shorter ones;
      ▪ Typically, chunks are a fixed size, but they may vary by model if it is observed that accuracy can be increased by use of shorter chunks, longer chunks, or a greater number of shorter chunks or fewer but longer chunks;
      ▪ In addition, other techniques can be utilized to perform the data extraction or improve its functioning, examples of which are disclosed and/or described herein; and
- Standardize the Outputs of the Model and Provide to the User;
   ∘ As an example. one or more embodiments may include parsing logic (described further herein) that, depending on the field type and settings in the model configuration process, understand what type or form of output is desired and can parse that out of a longer response and if necessary, standardize it into a structured form of data.

In one embodiment, the disclosure is directed to a system for enabling a user to formulate and execute a query against a corpus of documents and do so in a computationally efficient and scalable manner. The system may include a set of computer-executable instructions stored in (or on) a memory or data storage element (such as a non-transitory computer-readable medium) and one or more electronic processors or co-processors. When executed by the processors or co-processors, the instructions cause the processors or co-processors (or a device of which they are part) to perform a set of operations that implement an embodiment of the disclosed and/or described method or methods.

In one embodiment, the disclosure is directed to a non-transitory computer readable medium containing a set of computer-executable instructions, wherein when the set of instructions are executed by one or more electronic processors or co-processors, the processors or co-processors (or a device of which they are part) perform a set of operations that implement an embodiment of the disclosed and/or described method or methods.

In some embodiments, the systems and methods disclosed and/or described herein may be provided as services accessed through a SaaS or multi-tenant platform. The platform provides access to multiple entities, each with a separate account and associated data storage. Each account may correspond to a user, an entity, a set or category of entities, a set or category of users, a set or category of documents, a domain or sub-domain of document content or users, an industry, or an organization, for example. Each account may access one or more services, a set of which are instantiated in their account, and which implement one or more of the methods or functions described herein.

Other objects and advantages of the systems, apparatuses, and methods disclosed may be apparent to one of ordinary skill in the art upon review of the detailed description and the included figures. Throughout the drawings, identical reference characters and descriptions indicate similar, but not necessarily identical, elements. While the embodiments disclosed or described herein are susceptible to various modifications and alternative forms, specific embodiments are shown by way of example in the drawings and are described in detail herein. However, embodiments of the disclosure are not limited to the exemplary or specific forms described. Rather, the disclosure covers all modifications, equivalents, and alternatives falling within the scope of the appended claims.

### BRIEF DESCRIPTION OF THE DRAWINGS

Embodiments of the disclosure are described with reference to the drawings, in which:
Figure 1(a) is a diagram illustrating a process, method, operation, or function that may be performed in an implementation of an embodiment of the disclosed system and methods;
Figure 1(b) is a Table illustrating an output produced by a model that was requested to identify and classify carveouts in a set of documents that limit liability;
Figure 2 is a diagram illustrating elements or components that may be present in a computer device or system configured to implement a method, process, function, or operation in accordance with some embodiments of the systems, apparatuses, and methods disclosed herein;
Figures 3-5 are diagrams illustrating an architecture for a multi-tenant or SaaS platform that may be used in implementing an embodiment of the systems and methods disclosed herein;
Figures 6(a) through 6(h) are diagrams illustrating an example of the user experience when interacting with an embodiment of the systems and methods disclosed herein; and
Figures 7(a) through 7(g) are diagrams illustrating example charts or displays that may be generated by the system based on the extracted data or information to assist a user in understanding trends or aggregated data from the agreements or other form of documents.

Note that the same numbers are used throughout the disclosure and figures to reference like components and features.

### DETAILED DESCRIPTION

One or more embodiments of the disclosed subject matter are described herein with specificity to meet statutory requirements, but this description does not limit the scope of the claims. The claimed subject matter may be embodied in other ways, may include different elements or steps, and may be used in conjunction with other existing or later developed technologies. This description should not be interpreted as implying any required order or arrangement among or between various steps or elements except when the order of individual steps or arrangement of elements is explicitly noted as being required.

Embodiments of the disclosure are described more fully herein with reference to the accompanying drawings, which form a part hereof, and which show, by way of illustration, exemplary embodiments by which the disclosure may be practiced. However, the disclosure may be embodied in other forms and is not limited to the embodiments described or set forth herein; rather, these exemplary embodiments are provided so that this disclosure will satisfy the statutory requirements and convey the scope of the disclosure to those skilled in the art.

Among others, the subject matter of the disclosure may be embodied in whole or in part as a system, a platform, as one or more methods, or as one or more apparatuses or devices. Embodiments may take the form of a hardware implemented embodiment, a software implemented embodiment, or an embodiment combining software and hardware aspects. For example, in some embodiments, one or more of the operations, functions, processes, or methods disclosed and/or described herein may be implemented by one or more suitable processing elements (such as a processor, microprocessor, co-processor, CPU, GPU, TPU, QPU, or controller, as non-limiting examples) that is part of a client device, server, network element, remote platform (such as a SaaS platform), an "in the cloud" service, or other form of computing or data processing system, device, apparatus, or platform.

The processing element or elements may be programmed with a set of executable instructions (e.g., software instructions), where the instructions may be stored in (or on) one or more suitable non-transitory data storage elements. In some embodiments, a set of instructions may be conveyed to a user through a transfer of instructions or an application that executes a set of instructions (such as over a network, e.g., the Internet). In some embodiments, a set of instructions or an application may be utilized by an end-user through access to a SaaS platform or a service provided through such a platform.

In some embodiments, the systems and methods disclosed and/or described herein may be provided as services accessed through a SaaS or multi-tenant platform. The platform provides access to multiple entities, each with a separate account and associated data storage. Each account may correspond to a user, an entity, a set or category of entities, a set or category of users, a set or category of documents, a domain or sub-domain, an industry, or an organization, for example. Each account may access one or more services, a set of which are instantiated in their account, and which implement one or more of the methods or functions described herein.

In some embodiments, one or more of the operations, functions, processes, or methods disclosed and/or described herein may be implemented by a specialized form of hardware, such as a programmable gate array, application specific integrated circuit (ASIC), or the like. Note that an embodiment of the disclosure may be implemented in the form of an application, a sub-routine that is part of a larger application, a "plug-in", an extension to the functionality of a data processing system or platform, or other suitable form. The following detailed description is, therefore, not to be taken in a limiting sense.

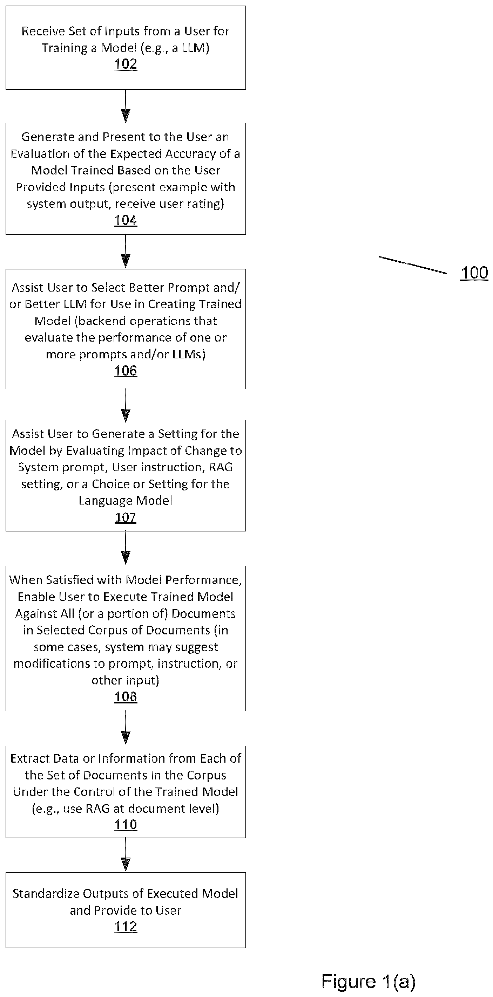

In some embodiments, the disclosure is directed to systems, methods, and apparatuses for enabling a user to formulate and execute a query against a corpus of documents and do so in a computationally efficient and scalable manner. In one embodiment, a method (as described with reference to Figure 1(a), which is a diagram illustrating a process, method, operation, or function 100 that may be performed in an implementation of an embodiment of the disclosure) may include the following steps, stages, functions, or operations, some of which are used to train a model to execute the desired query:
- Receive a set of inputs from a user for training a model (e.g., an LLM), as suggested by step or stage 102 - in one embodiment, these inputs may include:
   ∘ What field they want to populate as an output (i.e., instruct the model to place the output into a desired field or category);
      ▪ By choosing the field, the system may obtain information useful for suggesting instructions and/or improving a prompt to ensure better (i.e., proper) outputs including:
         - Field name (which is often a good proxy for what the user is trying to do or know);
         - Field type (to know what type or form of data a user is trying to track and as a result, the form in which extracted information should be presented);
         - Field settings;
            ∘ Constraints or settings a user has set on a field, for example:
               ▪ For a dropdown field, the system will know the inputs available options for a user to choose from, which tells the system what outputs the process flow might be limited to producing (and which might be considered an error);
               ▪ For a numbers field, there may be an upper or lower bound of acceptable values, and that information can be fed into a prompt as guidance to say "return a value between X and Y";
      ▪ In one embodiment, a user may be able to provide instructions or an example, and the process flow may auto suggest a field name and type of field to store the data in (i.e., the "key" in the key value they are creating);
   ∘ What documents to run the query against or on;
      ▪ A user can choose to run a query on all documents in a corpus or only specific ones;
         - The user can filter by selecting documents in certain folders, documents with certain metadata attributes, only documents with a certain clause found in them, only customer agreements, or only NDAs, as non-limiting examples, or they may select a combination of filters and/or constraints;
         - In some embodiments, the system may "incentivize" users to limit the set of documents being processed where there are one or more things to filter on - this may be done to reduce the cost to run the model (since each call to an LLM costs a certain amount);
            ∘ This aspect may be reflected in a pricing structure that charges more for running a new model on a greater number of documents;
   ∘ One or More Instructions;
      ▪ In one example, this is a plain English expression of what the user wants the system to do (e.g., the task or goal);
      ▪ If the user started from a conversational AI process, the system may pre-populate this with the question the user already asked, though they can modify it if desired (such as to narrow or expand it, or add other terms);
         - In one embodiment, the user's input may be processed using natural language processing or understanding (NLP or NLU) techniques such as generating embeddings and clustering to enable better interpretation of, and acting upon the user input(s);
      ▪ Suggest Instructions from the system - a user can also ask the system to suggest instructions instead of creating them from scratch, and with the selection of an appropriate user interface element the system may do the following;
         - In the backend, the system feeds an LLM one or more of:
            ∘ Information about the user and/or company making the request (thereby providing context, as that information may provide access to other relevant data or information);
            ∘ Information about the document the user started building the model from, if applicable (such as the type or purpose of the document);
            ∘ The name of the field the user is trying to populate and other information about the field (if available, such as format, expected characteristics of data placed into field);
            ∘ The user's initial question used in the Conversational AI process, if applicable; and
            ∘ A customized prompt tailored to result in a "good" output;
         - The system process flow may then output 1 to 5 (or more) suggested instructions it thinks the user might want - the user can choose to accept one of them or discard and revert to the previous instruction(s), edit the suggested instructions, and/or or write their own;
      ▪ Alternative path for instructions:
         - In one embodiment, a user may highlight what they want the system to extract from a single document, and that is fed into an LLM (using, for example, multi-step reasoning) to determine what the LLM "thinks" the user is trying to do, and to create a custom prompt and instructions to identify that data or information (such as a specific value) in other documents;
         - In this embodiment, the disclosed system may consider one or more other datapoints as described above to assist in formulating the prompt and/or instructions (e.g., information about the user, or the context or meaning of a term);
      ∘ In one embodiment, a user may access an "Automation Hub" feature and indicate they want to build a new model using that feature. The Automation Hub feature(s) may include one or more of the following tools, processes, functions, or capabilities:
         ▪ Tools and/or user interface elements to enable a user to manage a custom model;
         ▪ Tools and/or user interface elements to enable a user to build a new model or view and manage an existing one; or
         ▪ When a user builds a model from this feature, they can start from scratch or use pre-made templates where available (e.g., there may be a template for tracking a datapoint). They will then have one or more of field, scope, and instructions pre-populated. If their use case is different, they can modify one or more of those aspects to better match their specific use case and needs;
      ∘ Note that one or more of these steps may also be used when inputting a query to a trained model;
- Generate and Present to the User an Evaluation of the Expected Accuracy of a Model Trained Based on the User (and/or the system) Provided Inputs (as suggested by step or stage 104);
   ∘ In one embodiment, as part of the evaluation of the model performance, a user may be presented with the following:
      ▪ A document (which may be displayed in a preview mode);
         - The document may be rendered and then auto scrolled to the relevant section (or the first of multiple sections if there are multiple relevant sections) to make the review more efficient;
      ▪ The system or process flow's output, i.e., what the process flow "thinks" the answer to the user's query is;
      ▪ A rating table to allow the user to "rate" the provided answer as either:
         - Correct, where if chosen, then the system shows the user the next document to rate;
         - Incorrect, where if chosen, the user is asked to provide the correct answer and optionally can provide an explanation for why the system's answer was wrong or their answer is better (i.e., more correct). This explanation may be used as part of later generated suggestions and/or as training data for a model by representing a positive/correct example or an explanation or reason to guide a model; or
         - Skip (e.g., the document may be in a foreign language that the user can't evaluate the accuracy of);
      ▪ Note that this evaluation process also provides the system with a set of ground truth data for use elsewhere in the process flow as part of model training or evaluation;
- Assist the User to Select a "Better" Prompt and/or "Better" LLM for Use in Creating a Trained Model to be Published (as suggested by step or stage 106);
   ∘ In some embodiments, the disclosed system includes an orchestration layer that (among other functions) assists a user to select a better (or best) prompt and a better (or best) LLM for a model to use when it is published (i.e., finalized and released to the user for execution over a set of documents);
   ∘ In some embodiments, the orchestration layer (or an equivalent function, element, or service) may provide features or functions to assist a user with one or more of the following tasks, where these are intended to assist in making a model scale more efficiently at production:
      ▪ Choosing the "right" or "best" prompt for a request (or letting a request inform it which prompt to use);
      ▪ Choosing the "right" or "best" LLM for a request (or letting a request inform it which LLM to use);
         - The "right" or "best" prompt and LLM are determined by comparing the outputs a prompt and LLM generates against the user's ratings, and picking the one that generates the highest accuracy;
      ▪ Managing the rate limits that LLMs typically have to ensure requests don't create a problem - including, for example, managing rate limits when there are multiple requests by the same or different services, or by different clients;
      ▪ Allowing the operator of the platform that is providing access to the disclosed and/or described services and functions to add new prompts and LLMs to existing functionality (as these elements connect to the orchestration layer and may be built within the layer).
      This makes expandability easier because LLMs change, and the state of the art is also changing. This approach provides a flexible solution and can more easily grow and change without requiring the underlying software to undergo a significant change;
- Assist the user to generate a setting for the model trained based on the user provided inputs by evaluating an impact of a change to one or more of a system prompt, a user instruction, a RAG setting, or a choice or setting for the language model (as suggested by step or stage 107);
- When Satisfied with a Model's Performance, a User "Publishes" the Model and Executes It Against All (or a portion of) Documents in a Selected Corpus of Documents (as suggested by step or stage 108);
   ∘ Prior to executing the model on a set or corpus of documents, the disclosed and/or described system, platform, or apparatus may execute one or more processes to "improve" a prompt, an instruction, or the selection of documents (or other aspect of the inputs to a model) using a technique or techniques disclosed and/or described herein. This may be done to improve accuracy and/or scalability of the developed model;
      ▪ In one embodiment, this may be performed automatically even if a model is already at acceptable accuracy to determine if there is a cheaper option. If a model is not achieving perfect accuracy, then accuracy may also be used to determine if an improvement can be made. In one embodiment, the "strictly more accurate" metric/measure is applied, as that doesn't tolerate any regression for choosing a better configuration or model;
   ∘ When executing a model against a corpus of documents, an embodiment of the disclosure may perform one or more of the stages or approaches disclosed and/or described herein to improve efficiency, accuracy, or reduce the cost of execution. As non-limiting examples, these may include one or more of;
      ▪ Use one or more of the heuristics mentioned when describing how to select documents for the user to evaluate to choose which documents to execute the model against versus which should be skipped and assumed to have no extractable value. This may be important because it is expensive to use LLMs at large scale across hundreds of thousands or millions of documents;
   ∘ As mentioned, in some embodiments, the disclosed system may include an orchestration layer element or component that can execute models across a relatively large volume of documents, where each model may have:
      ▪ Unique prompts;
      ▪ Unique instructions;
      ▪ A choice of a specific LLM from a list;
- Extract Data or Information (e.g., a value or values) from Each Document of the Set of Documents in the Corpus Under the Control of the Trained Model (as suggested by step or stage 110);
   ∘ In one embodiment, for a given document, the model operates to extract one or more of data, information, or values from documents using (as an example) the following process flow:
      ▪ Use retrieval augmented generation (RAG) at the document level (i.e., for each document in the corpus separately) to feed into the LLM/model a prompt (with the instructions as part of the prompt) and a snippet or snippets of the document that are selected to be most relevant and most likely to contain the answer (e.g., based on an embedding derived measure of relevance, similarity, or another relevant metric);
      ▪ Embodiments may include a step or process stage to create a "profile" for RAG purposes of what embeddings to look for in each document;
         - Then on any given document, the process performs RAG on just that document (so there's no concept of RAG across many docs which may cause some docs to be excluded and not evaluated), and examine the most relevant chunks in each document;
      ▪ How RAG is used on each document may vary - e.g. on longer documents, the processing may pull more chunks of text than for shorter ones;
      ▪ Typically, chunks are a fixed size, but they may vary by model if it is observed that accuracy can be increased by use of shorter chunks, longer chunks, or a greater number of shorter chunks or fewer but longer chunks
      ▪ Instead, or in addition, other techniques can be utilized to perform the data extraction process or improve its accuracy and functioning. As non-limiting examples, these may include one or more of:
         - Use of embeddings that are "tuned" for contracts (or the type or category of document in a corpus) to increase the accuracy of the embeddings and comparisons between embeddings;
         - Employ language within the prompts and system messages to establish guardrails against a user "jailbreaking" or learning the system generated prompts;
         - Force the system process flow to reason first, answer second, so that it doesn't just generate an answer but reasons through it, which increases accuracy;
         - Employ techniques in some prompts and for some data types to make the process argue for multiple candidate outputs for a document, and then decide what to present to a user once it's done that;
         - Ask the LLM/model to output the snippets in the document that it identified as most relevant for answering the user query/question so that the information can be used to highlight text for the user to verify and validate the process answers;
      ▪ If the system (i.e., the disclosed and/or described process flow) doesn't do this or do it well enough, the text snippets used with the RAG process and/or that the process based its answer on may be used. By applying embedding similarities (or another relevant metric) the system can choose the 1 or 2 that appear to be "best" and highlight those to show users highlighted text in the document indicating where the extracted value or answer came from; and
- Standardize the Outputs of the Executed Model and Provide to the User (as suggested by step or stage 112);
   ∘ One or more embodiments may include parsing logic that, depending on the field type and settings in the model configuration process, are able to "understand" what type or form of output is desired and can parse that out of a longer response, and if necessary, standardize it into a structured form of data.

In one embodiment, a user may provide additional information to assist the document processing flow to better identify a response to a user query. As an example, if the document processing returned an incorrect answer, then a user can "tag" or otherwise identify the correct answer in a document to indicate where the correct answer was located (i.e., guiding RAG) and also indicate what the correct answer is (thereby guiding the LLM). Further, even if the document processing returns the correct answer, a user can tag a source in the document to show an additional place the process flow could have or should have looked to further guide RAG.

In general, embodiments permit a user to highlight one or more pieces of text (as short as a word, or as long as one or more paragraphs) and designate it as either a "Source" or "Answer", where if designated as answer it is then automatically also designated as a source. Note that there can be more than one source for any given document, and there may be no "answer" returned and only sources. This may be because sometimes the answer to a question isn't explicit in a document but must be inferred from a source or sources.

In one embodiment, a customized prompt may be selected from a set of candidate prompts that have been generated and are stored for later access. These may include ones generated using different approaches, including (for example) zero-shot, multi-shot, chain of thought (CoT), very simple, or legal expert. To generate the instructions (which are a component of the prompt), the process takes as inputs the field name, the name of the user, the company name, the documents they've already rated, any instructions they already provided, the field settings, any ratings they've given, and any feedback they've given. These inputs are fed into multiple different LLMs with multiple different instructions at multiple different temperatures to generate a range of new instructions.

Next, the process combines instructions with prompts to create the "universe" of combinations used to evaluate the prompts (e.g., 10 instructions generated, and 10 system prompts would equal 100 permutations for purposes of testing). Each is tested and its accuracy evaluated. The "best" or most suitable prompt may be determined based on two metrics to let the have a choice:
- Most accurate and Most Strictly Accurate, where
   ∘ Most accurate = highest correct percentage overall;
   ∘ Most strictly accurate = highest correct percentage overall that does not turn any previously correct answers to incorrect (so no regressions)

The user is shown both metrics and chooses between the prompt they prefer to use. The system may use tie breaker methods if multiple ones are at the same level of accuracy, including cost of LLM (cheaper = better), length of prompt or instructions (shorter = better), with adjustments for partial correctness, or other factor.

As suggested by the disclosed and/or described process flow, in some embodiments, an entry path may be a user question posed using Conversational AI and directed at a single document or at a corpus of documents. The user may then select that question to initiate a process flow to build a robust model. As an alternative, a user can utilize an "Automation Hub" feature disclosed herein and indicate they want to build a new model.

The use of conversational input techniques as part of one or more embodiments overcomes limitations and problems with conventional uses for purposes of querying a corpus of documents. For example, conventional approaches typically apply a context window which means the process can only look at a prescribed number of tokens (and if it looks at too many even with a larger context window, recall worsens - this is used to maintain a high accuracy of short contexts across corpuses but may not be sufficiently accurate for more complex queries.

In contrast, embodiments require more focused time up front to capture what a user wants to do, to provide examples, provide feedback, and iterate, combined with using that information to optimize for both cost, scalability, and accuracy. As described, this optimization may include such approaches as changing or modifying LLMs, system prompts, RAG settings, chunk size settings, and other aspects based at least in part on understanding user intent and the desired outcomes on edge cases.

Embodiments may include a form of conversational AI guidance in a system generated message that suggests to a user when a question/query is better suited for the disclosed data extraction capability as part of the function calling step in Conversational Al. When a user does follow this flow, any information they already entered can be used to pre-populate the data used (e.g., their query would be populated in the instructions field) to reduce the effort needed by the user. They would then follow the normal training flow described herein.

As mentioned, in some embodiments, the Automation Hub feature(s), services, or functionality may include one or more of:
- Tools and/or user interface elements to enable a user to build a new model or view and manage an existing one (such as their custom model);
- When a user builds a model using this feature, they can start from scratch or use pre-made templates where available (e.g., there may be a template for tracking a datapoint). They will then have one or more of field, scope, and instructions pre-populated as model inputs. If their use case is different, they can modify one or more of these inputs to better match their specific use case and goals.

Depending on the type of field a user chooses, the system may ask for additional information or assume information based on the field chosen by the user to populate;
- As non-limiting examples:
   ∘ If a user chose a "monetary value" field, the system may inquire if they want to include currency and amount, and what format to have the process output the currency in;
   ∘ If a user chose one of the "drop down" fields, the system might ask them:
      ▪ Do you want to treat this as a closed drop down (i.e., the drop-down menu defines the options such as "Yes" and "No" or "High Risk", "Medium Risk", "Low Risk", or other categories of their choosing), or is the field open ended?

As a result of the initial configuration steps, the disclosed system now knows:
- What type of value/output the user is trying to identify in each document;
- What documents to execute a model on (if narrower than "all docs in a corpus"); and
- The user's intent, goal, or business objective, as expressed in plain English.

Once a user provides the data and information during the model configuration stage, the disclosed system validates that the instructions are sufficient (i.e., clear enough) to use to execute an LLM/model based on the configuration data and sets a baseline for model performance. This may be performed manually or by using an LLM to evaluate a set of example documents and determining if the LLM output is likely to be adequate. Note that during model execution, the following outcomes can occur:
- As it reviews data the system gets everything right, in which case a user can proceed to publish a model; or
- The user observes the system struggle to generate a correct response/output on certain examples, in which case they can update the instructions to better guide the processes when applied to the corpus.

Essentially, the system's process flow is attempting to mimic how a person might train an assistant or an intern to do a job; that is, give them instructions but check in or supervise their first few attempts at a task to see how they're doing. If they're struggling or the person realizes their instructions weren't comprehensive enough, then provide more information, which is what the system asks users to do.

Throughout the model evaluation process, users can track progress by seeing what percentage of the model responses are correct, and what percentage are incorrect (where skipped documents are typically excluded). If a user accidentally marks a document wrongly, they can go back and change their answer. A user can also go to the incorrect model responses to see what the incorrect ones were and determine why. This may enable them to identify common characteristics of the incorrect answers, or other features of interest, so as to improve the instructions.

As mentioned, throughout the model evaluation process, users are providing the disclosed system with ground truth data on what is correct for each document in a set of documents. For every document shown to a user (other than those skipped) the system records what the correct answer was:
- If it was marked correct, the system records the output as the known "correct" answer;
- If it was marked incorrect, the system records the user provided "correct"' answer requested of them by the system.

During the rating process, and for most field types, the disclosed system process flow operates to articulate it's reasoning in the system backend to explain its answer. For some data types, a user may be able to access this information so they can see that the process gave answer X because it thought XYZ. This may assist a user to understand what the process is having trouble understanding or doing, identify a source of an error, identify a source of confusion, or determine what the system is focused on if it provides an incorrect response to the user. This enables a user to better update/improve the instructions they provide to the system. It's also something that may be fed into an "updating instructions" flow to suggest "better" instructions.

As mentioned, when choosing which documents the system presents to a user for review and evaluation of a model's performance, the system may employ one or more techniques to maximize the output of each of the reviews and minimize the number of documents needing to be reviewed to obtain "optimal" outputs. As non-limiting examples, these techniques may include one or more of:
- Using the given instructions and field type, generate a list of words, phrases, or other variables that, if not present in the document indicate there's only a negligible (^{~}0%) chance the desired value exists/can be found in the document. Exclude any such documents. This has been found to reduce the review pool of documents by ^{~}10%;
- Group documents using a clustering technique and take samples from each cluster, so a user is reviewing a diverse set of samples, as opposed to reviewing the same document template multiple times, as reviewing multiple samples that are very similar has minimal benefit in improving a model's performance. Depending on the pool of documents, this may be used to define (or constrain) how tightly a cluster is defined;
- Randomly pick documents from the pool of available documents;
- Have the system run on a larger set of documents, then use LLM data (such as the confidence level for an output or classification) for each output token, or an analysis of the first, second, and third options considered as outputs for each token to determine which ones the system process struggled with the most, then output those;
- Have the system process execute over a larger set of documents or examples, and feed the answers into another LLM and have that LLM "judge"/classify whether the answer is either:
   ▪ Clearly correct, no review needed;
   ▪ Unclear or possibly incorrect; or
   ▪ Clearly incorrect;
      ∘ As an example, this could be implemented using a fine-tuned LLM operating on data from either that client or multiple clients. As an alternative, a general foundational model (such as GPT, or Claude) could be used with appropriately tested system prompts;
      ∘ The system would then have the user review items in the 2nd and 3rd groups (unclear or incorrect), thus making better use of their time and more quickly surfacing edge cases which, by their nature, are rarer but which the user should define before running the query or model on the entire population of documents (as that population will likely include edge cases);
- Have the system run on a larger set of documents, and then use sentiment analysis to analyze the reasoning for each output/answer to determine a confidence level (either against baselines set across all clients or relative confidence levels within the specific model to highlight outliers) and using that level, whether an output is one that requires human review (or not) to classify an output as correct, incorrect, or indeterminate.

As mentioned, during the evaluation process, a user is creating ground truth data. However, in some cases the model is not generating completely correct outputs (or some lower desired/acceptable metric reflecting accuracy). In this situation, the system may dynamically identify when to ask the user to update the instructions to find out if that will improve the outputs/outcomes:
• In some embodiments, the system can employ one or more criteria to decide when to ask a user to update the instructions. Non-limiting examples of such criteria include the following;
   ∘ If there have been 2 incorrect outputs in the last 5 they reviewed;
   ∘ If there have been 2 incorrect outputs since they last updated their instructions; or
   ∘ If the system thinks an output the user marked incorrect is fixable based on the user's explanation or answer (in one embodiment, a trained LLM may be used to perform this evaluation);
      ▪ As one example, if the user said an answer is correct because of how the output was formatted, the trained LLM could determine that if the instructions were to be updated to format the output in a certain way, that would correct the problem;
      ▪ If the user was unhappy with how an edge case was handled (e.g., the system only output one answer, but there were multiple correct and it should've output them all), the trained LLM can then suggest updating the instructions to say "if multiple responses found, do this ..";
• A goal is to refine the instructions so that the user (now that they've seen how the process flow or model works) can better explain to the system what they want or tell the system how to handle edge cases that would be in a gray area if not explicitly defined;
   ∘ All user inputs continue to be in plain English;
   ∘ This step is optional - if the model performs sufficiently well with the initial instructions, this step does not need to be performed.

In some embodiments, users have two ways to update the instructions - they can either manually update the instructions such as by writing "do this in (edge case)", and/or let the system suggest updated instructions (in the manner it can suggest initial instructions):
- Suggest (new) Instructions;
   ∘ If a user selects this function, the system provides as inputs to the process
      ▪ Either all or a portion of the answers the user previously rated, with an emphasis on ones the process was getting wrong;
      ▪ Chunks of text that the answers were taken from, which act as the sources of the answers;
      ▪ The previous instructions;
      ▪ One or more of the other inputs provided in the initial Suggest Instructions flow;
- The system then operates to generate suggested instructions, with guidance in the form of a tuned prompt that ensures the process preserves the original intent of the previous instructions but adds or adjusts the language to account for edge cases;
   ∘ The process can generate instructions in several ways depending on how it is instructed to generate them. As examples:
      ▪ "generate 5 different "flavors" of instructions that meet the above" (the actual prompt would be longer);
      ▪ "generate an improved version of instructions" - the system could be used to do this 5 times and evaluate the outputs based on a suitable metric (such as using a "temperature" metric between 0.3 and 0.7 to ensure the outputs vary and provide truly different "flavors");
- When the process suggests new instructions, the system (behind the scenes and typically not presented to a user) automatically evaluates how "good" the new instructions are and if they are "better" than the previous instructions (where better may refer to more precise, more interpretable or actionable, or more capable of generating accurate outputs, for example);
   ∘ If they are better, then the new instructions are shown to the user and the user is told what the expected model performance will be with the new instructions;
   ∘ If they are the same (or sufficiently similar in performance), then the new instructions are shown to the user, but the user is informed that the results will be similar;
   ∘ If the suggested instructions are worse in terms of performance, then the system tells the user the system could not improve on their instructions. Users can then manually modify instructions, review more documents, or publish the model as it is. A user may also choose to discard the model if they are unable to improve the accuracy and current model performance is not at a sufficient or acceptable level.

In some embodiments, evaluation of whether the system generated instructions are better than other iteration(s) of the instructions may be performed as follows. Similarly, if a user provides their own instructions, the system can assist a user to make sure the new instructions result in improved model performance and are not making the model performance worse:
- In one embodiment, the system may use the evaluation data from results on documents a user has already reviewed;
   ∘ When instructions are updated, or in the case of system generated instructions, before newly generated ones are shown to the user to suggest they update the existing instructions, the system re-runs the processing flow for the model using the candidate instructions (updated or system generated) against the evaluation data to determine how the performance compares, and what the new model performance would be if the existing instructions were updated to the newer instructions;
      ▪ This can be used to guide the user as to whether to keep going in the direction they have taken regarding changes to instructions, to step back, or to take one of the alternative paths described as possible approaches herein;
   • Note that comparing answers to a user query may be non-trivial in some cases, thereby complicating a process of improving instructions or another aspect of a model:
      ∘ For example, if it's a number field, then the system can compare the known correct answer to what the system is providing as an output;
      ∘ However, for other fields (such as open-ended text fields), it can be more com plicated
         ▪ For example, if a user asked the system to summarize the Assignment clause of a contract in 5 words, the system may use different words in each iteration. This means that the system can't directly compare word to word to determine model performance;
         ▪ To address this possible source of uncertainty or error, the system may employ one or more techniques for such a situation in which multiple answers can be correct;
            - Take the embedding representation of the answers and see how the representations compare (this is expected to be more agnostic to the specific words used in a response to a query);
            - Use fuzzy matching so that spacing, plurals, or extra characters (as examples) don't impact the comparison or evaluation of model performance;
            - For numbers, perform the comparison to a chosen significant digit (e.g., to the thousandth or ten-thousandth decimal place);
            - Feed the known correct answer and the system's output into an LLM and ask it whether the two outputs are equivalent for the purposes of answering the instructions provided;
         ▪ One or more of these unique solutions provide a way to use ground truth data to know if an output is the correct answer or not, and also can provide a performance metric that may suggest the best or better instruction(s) and not just the instruction(s) that best mimic the previous output(s);
   • At this stage, and now that the system has ground truth data, the system may start evaluating what the best "backbone" or LLM is to use to assist the user. As mentioned, in one embodiment, the system includes an orchestration layer that chooses the "best" (or a better) prompt and the "best" (or a better) LLM for a model prior to it being finalized and released to the user, and the system may start checking for those aspects to improve accuracy;
      ∘ This is desirable because different models perform better with different prompts or using different LLMs. As examples, one LLM may provide good performance for certain types of data, while GPT 4 may be preferred for other types of data, or Claude (an LLM based AI assistant provided by Anthropic) for some types of data or within a specific domain;
         ■ At present, one doesn't know ahead of time which LLM is "best" for a particular query and set of documents, but for a given use case, the system can perform an evaluation (e.g., using the described process for evaluating model performance) by taking the instructions and testing with one or more different prompts and LLMs to see which perform better or best;
      ∘ To illustrate this process, assume the following scenario:
         ■ 10 documents that have been reviewed with correct answers known (i.e., ground truth data);
         ■ 1 existing instruction and 5 candidate instructions generated by the system (6 total);
         ■ 5 "flavors" of prompts for the data type being tracked;
         ■ 3-4 LLM options to choose from (e.g., for now, assume these are GPT 4 Turbo, GPT 3.5 Turbo, and Claude 2.1);
         ■ These assumptions mean that when in the "update and improve" phase, the system may be asked to evaluate:
            - 6 instructions on 10 documents trying 5 flavors of prompts for each instruction and trying them with 3-4 LLMs;
            - In other words, and for 3 LLMs, the system will do an analysis of 6 * 10 * 5 * 3 = 900 possible combinations or scenarios that result in
               ∘ A suggestion to the user on which instruction and/or LLM to use;
               ∘ A backend toggle that sets;
                  ■ Which prompt/instruction to use; and
                  ■ Which LLM to use.

The steps in the above evaluation stage can be repeated several times, such as by executing it, reviewing more documents, determining performance, and then executing again. It's not a purely linear set of operations but can be permitted to loop until the user is satisfied with the model performance.

Once a user is satisfied with the performance of a developed model, they "publish" the model and have it executed on (i.e., applied to) all documents in a set of documents. The user may set the scope in the configuration stage so a model will be executed against all documents within the scope (although a user may alter the scope later). Users may have visibility into how a model is performing in terms of progress against the corpus and number of values populated. The model may be executed against not only documents available within the system at present (and in the user's defined or selected corpus), but new(er) documents uploaded to the system that meet the scope criteria set in the configuration stage.

When executing a model against an entire corpus, the system may perform one or more of the stages or approaches disclosed and/or described herein, which may include one or more of the following operations or functions:
- Use one or more of the heuristics mentioned in the discussion of selecting documents for a user to choose which documents to execute the model on versus which the system should skip and assume that no value can be found. This may be important because it is expensive to use LLMs at scale across hundreds of thousands or even millions of documents;
- As mentioned, the system may include an orchestration engine that can run models across a large volume of documents where each model has:
   ∘ Unique prompts;
   ∘ Unique instructions;
   ∘ A choice of LLM from a list;
   Because no two models are necessarily the same, in some embodiments, the system has been built with infrastructure to support this level of dynamism. Every time a model is run it pulls in a Model ID and a document. Then using the Model ID, the system applies a set of parameters by pulling from a database and constructing one or more of the following: System Prompt, User Instructions, LLM, Possible outputs/accepted answers (if applicable), RAG settings (including dynamic settings applied to the document based on page length) and LLM used
- The system may perform a final adjustment to a prompt to try and increase performance if a model is not performing at 100% (or a desired level of) accuracy;
   ∘ In one embodiment, the system accesses some of the "incorrect" prompts (where even after instructions were updated, the model did not perform as desired), and feeds them into the prompt as "negative" examples, and similarly, ones where the model did perform as desired may be used as "positive examples";
      ▪ This may be done at this stage (and only if needed) because there are both costs and limits to the tokens used, and this technique can use up a relatively large number of tokens. For example, this stage may be performed if the accuracy could use improvement, and the number of examples is dynamic and depends on the length of the prompt and instructions, and sufficient room is available (in terms of tokens) to use for the prompt. The number of examples included in this adjustment stage typically ranges between 1 and 10 examples;
   ∘ The adjustment or improvement is typically invisible to the user, though the system may inform them it is performing "optimization", which may consist of the adjustment and one or more of:
      ▪ A final review/backend test to validate that the system or user has chosen the best (or best within constraints):
         - LLM;
         - Prompt; and
         - Instructions.

For a given document, the model extracts a value or values using (as a non-limiting example) the following process flow:
- Use RAG at the document level (i.e., for each document in the corpus separately) to feed into the LLMs a prompt (with the instructions as part of it) and snippets of the document that are chosen to be most relevant and most likely to contain the desired answer (e.g., based on embedding relevance or another relevant metric);
- In addition, an embodiment may perform one or more of the following
   ∘ Use embeddings that are tuned for contracts (or the type or category of document in a corpus) to increase the accuracy of the embeddings;
   ∘ Employ language within the prompts and system messages to establish guardrails against customers/users jailbreaking or learning the system generated prompts;
   ∘ Force the process flow to reason first, answer second, so that it doesn't just make up an answer but reasons through it, which increases accuracy;
   ∘ Employ techniques in some prompts and for some data types to make the process argue for multiple candidate outputs for each document, and then decide what to present to a user once it's done that;
   ∘ Ask the model/LLM to output the snippet or snippets in the document that it found most relevant for answering a query or question so that information can be used to highlight the text for the user to verify and validate the answers;
      ▪ If the process doesn't do this or do it well enough, use the text snippets used with RAG and that the process flow based its answer on, and apply embedding similarities (or another relevant metric) to choose the 1 or 2 that appear to be "best" and highlight these so the system can show users highlighted text in the document for where the answer came from;
- Dynamically choose how much (i.e., what portions or information) of a document to retrieve via use of RAG and based on consideration of one or more factors, such as
   ∘ Length of the document - if a longer document, then return more text;
   ∘ Disparity in embeddings similarity. If there is a relatively large decrease in similarity after a certain snippet (e.g., first 5 look really similar, 6th and onward look much less similar), stop before the decrease even though that will occur in different locations for each document;
- Dynamically choose how long snippets should be based on the above criteria. In one embodiment, this may be done (also) at the model level, by determining an optimal number and length of snippets to return via RAG and use as inputs to the LLM.

While a user might be trying to extract a number, a date, or a specific answer such as "Yes/No", an LLM may provide more in a response. For example, if one asks a LLM to answer Yes or No as to whether its sunny outside, instead of answering "Yes" it might answer "Yes, it's sunny outside". This may be a problem since users typically want standardized or structured data as the output of a model;
• To address this possible problem or undesired output, embodiments may include parsing logic that, depending on the field type and settings in the configuration stage, knows what type of output is desired and can parse that out of a longer response and if necessary, standardize it into a desired format;
   ∘ An example of standardization would be if the output is a list of Countries, and ensuring the UK is referred to similarly and not sometimes as "The UK", other times as "The United Kingdom", and sometimes "United Kingdom";
   ∘ The system may also return the outputs in a predefined JSON format to increase the likelihood of it being properly formatted and containing the desired answer.

With regards to parsing, that technique may be applied to not only the output. As an example:
- Parsing an instruction into 'instructions on what to extract' and 'instructions on formatting' to produce better performance on retrieval by removing parts from instructions that are not relevant to finding the right part of a document;
   ∘ When users write instructions for an LLM, they often say what they want the LLM to find and also how to format the output;
      ▪ However, since the system uses RAG with embeddings to identify the most relevant parts of documents to read, this 'how to format' text clouds the embeddings and makes it harder to find the most relevant text;
   ∘ A possible solution is to employ a step where the system sanitizes the instructions to remove mention of formatting or other extraneous guidance or information to make the use of RAG more targeted. This occurs in the back end so that users can still provide whatever they want as the input;
      ▪ In one embodiment, this approach uses an LLM to sanitize the data but could employ other approaches such as a classifier to first classify whether there even is this extra data, and simpler parsing tools to parse out formatting from non-formatting instructions.

As disclosed and/or described herein, embodiments may incorporate a form of conversational AI to enable users to interact with the system and its processes more easily. In this context, conversational AI is a term used herein to describe or refer to functionality that enables users to "converse" with their documents and get responses to questions. Users can open a document and choose to "chat" with it by asking questions or requesting information in natural language text (although a speech-to-text process could be appended to permit input of audio). Examples of such a request or query are "Summarize this document for me", or "Does this contract allow me to reassign without the consent of the other party?".

In one embodiment, an implementation of a conversational AI capability may include one or more of the following functions or operations:
- A suitable UI for text entry;
- Use of natural language processing (NLP) or natural language understanding (NLU) to convert the text into a search query;
- Application of the query to a corpus, where this may include prior generation of embeddings and/or labeling, clustering, segmentation, or other processing of documents;
- Extraction/retrieval of search results from one or more documents;
- Processing of search results into a desired format; and
- Display of the search results to a user.

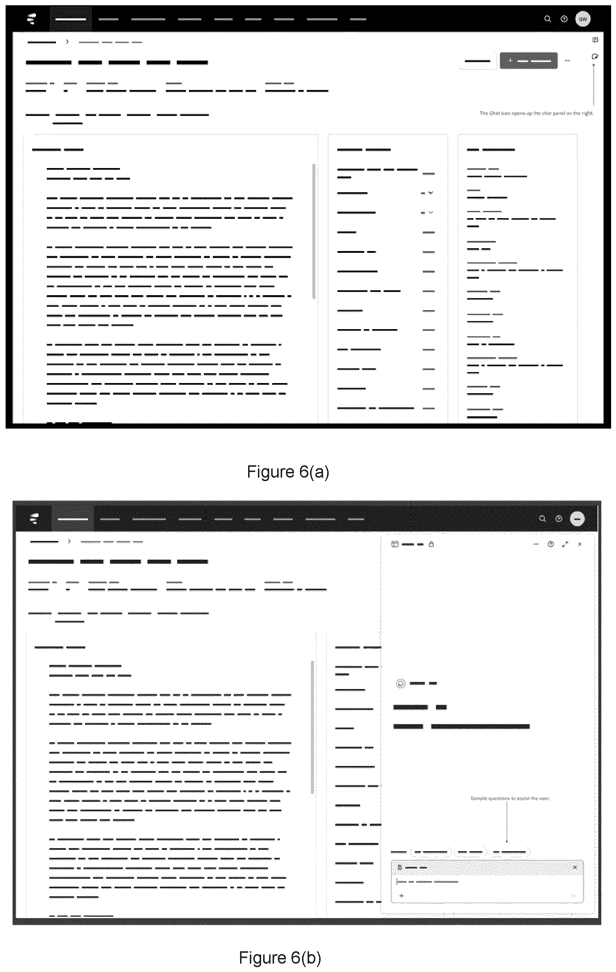

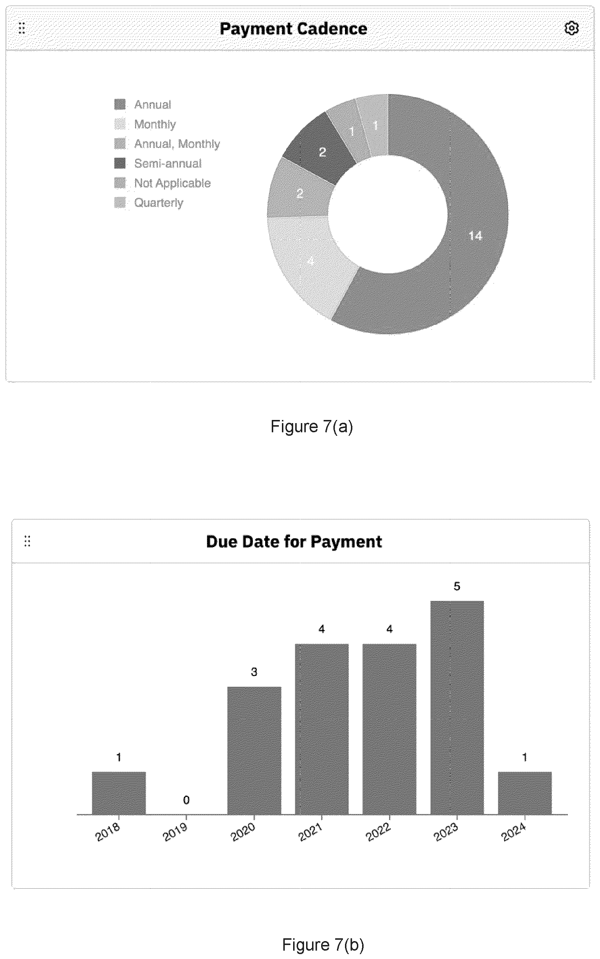

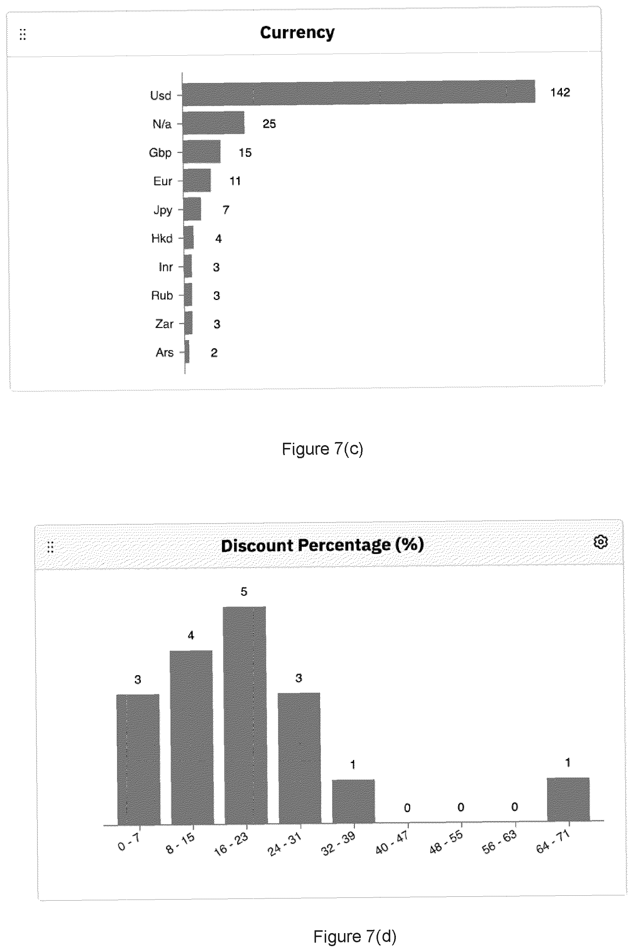

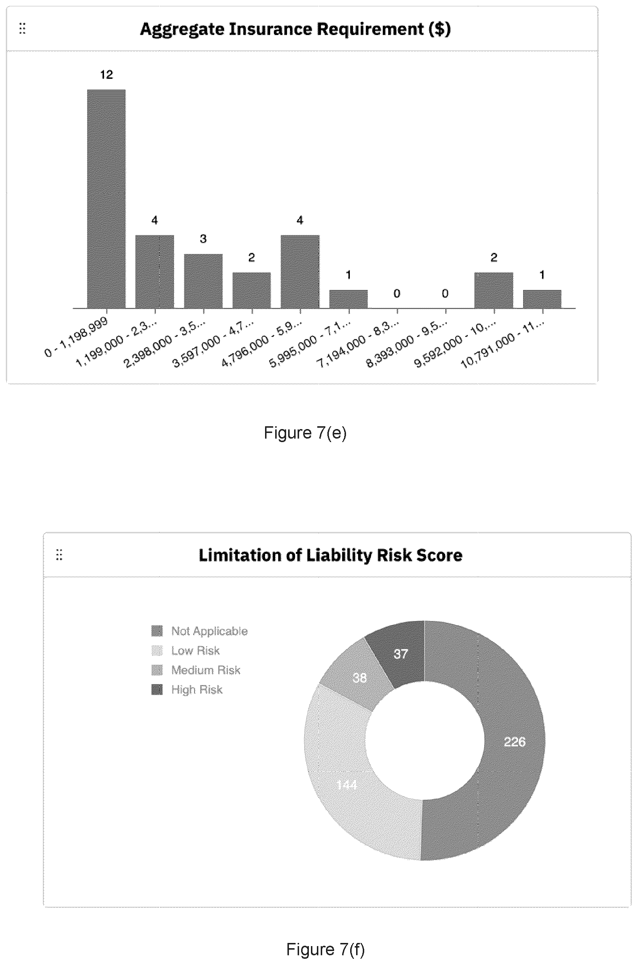

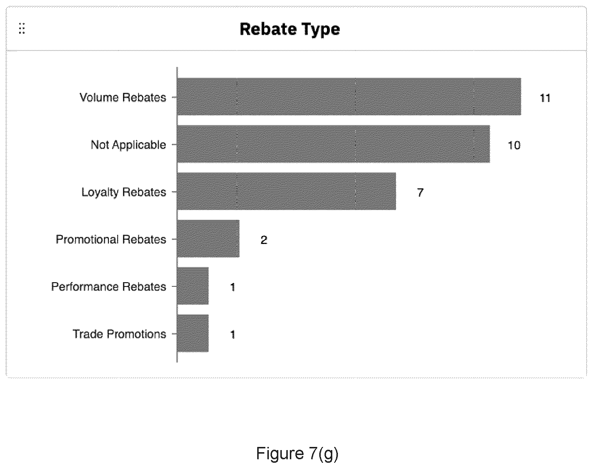

As a non-limiting example of the user experience (UX) and user interface (Ul) displays that a user would interact with when using an embodiment of the disclosure, Figures 6(a) through 6(h) are diagrams illustrating an example of the user experience, with corresponding descriptions below:
- Figure 6(a) - Document Preview / Fields Tab: Enter a document and the fields panel is displayed to the right of the document;
- Figure 6(b) - Document Preview / Chat Panel: Select chat icon in document navigation and chat panel is shown with sample questions to assist the user;

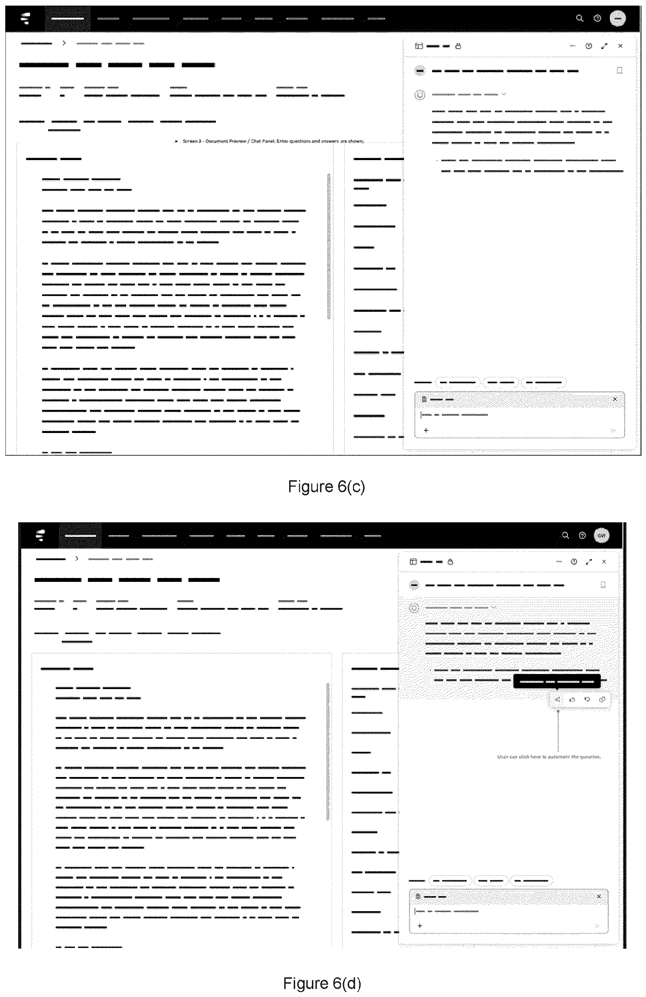

- Figure 6(c) - Document Preview / Chat Panel: Enter questions and answers are shown;
   ∘ E.g., for question from user: "What is the yearly price increase?"
   ∘ Answer: "The annual increase in Purchase Price should not exceed 10%, unless approved in writing by both parties.";
- Figure 6(d) - Document Preview / Chat Panel with Contextual Menu: Select question to automate question (i.e., build a field extraction model);

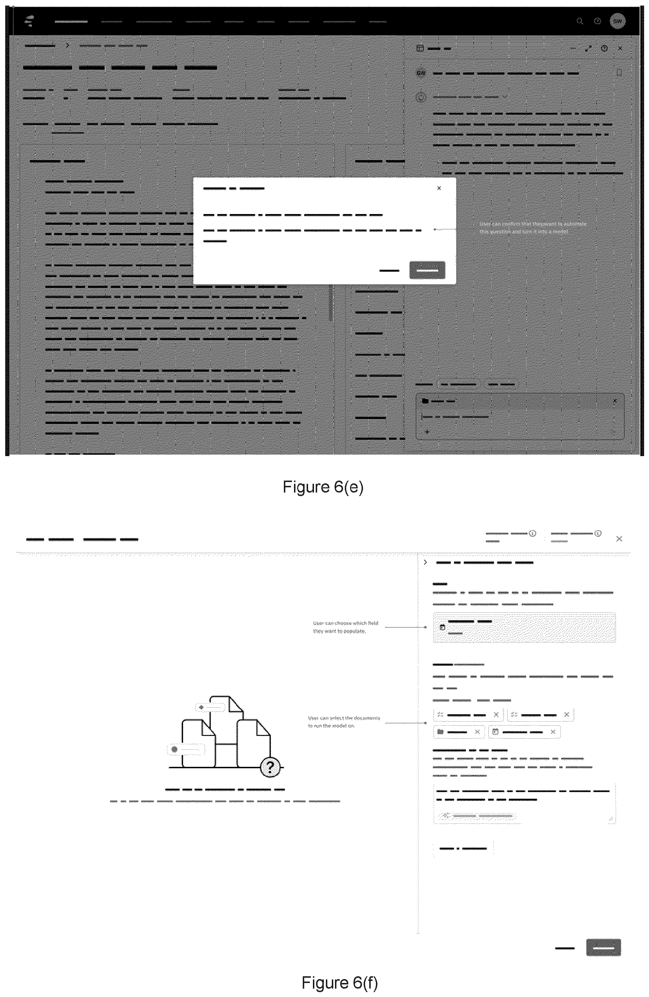

- Figure 6(e) - Mode (transition from Document Preview to Build State);
- Figure 6(f) - Build Model/Configure Tab: Configure build options to train a model;
   ∘ Field - Choose field to populate;
   ∘ Filter Documents - Select which documents to extract from via filters;

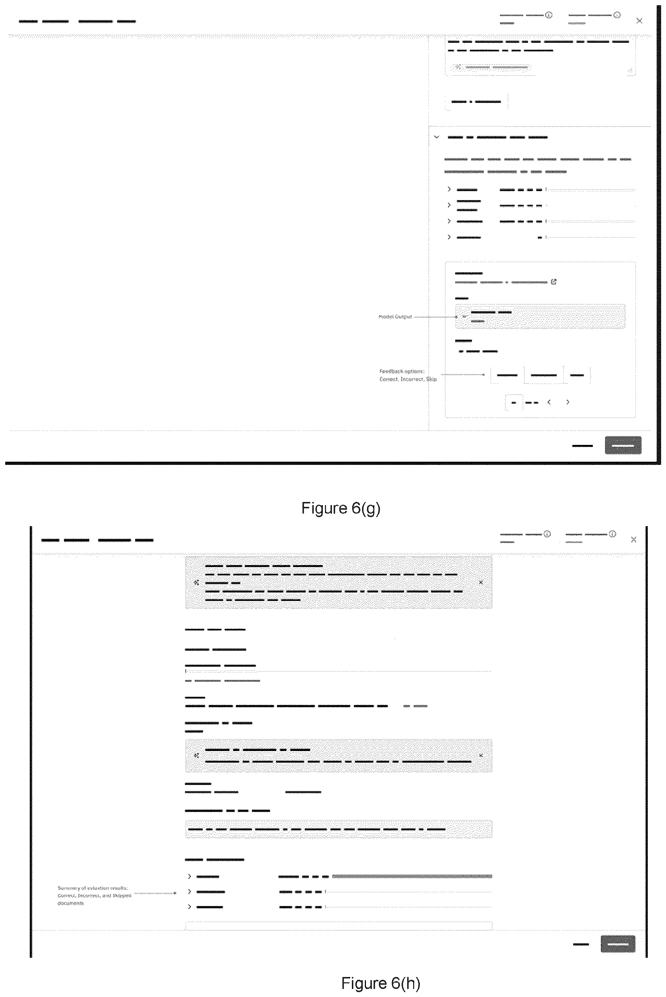

- Figure 6(g) - Build Model/Test Tab: Test the model against random documents and iterate through test results;
   ∘ Scroll document to relevant text and highlight;
   ∘ Show feedback options (e.g., thumbs up/down);
   ∘ Show input box for optional Feedback Comments when "Thumbs Down" feedback option is chosen;
   ∘ Show message ("your feedback is improving model") to user when feedback comments are sent;
- Figure 6(h) - Build Model/Review Tab: Show summary of evaluation results;
   ∘ Correct Results;
   ∘ Incorrect Results;
   ∘ Skipped Documents;

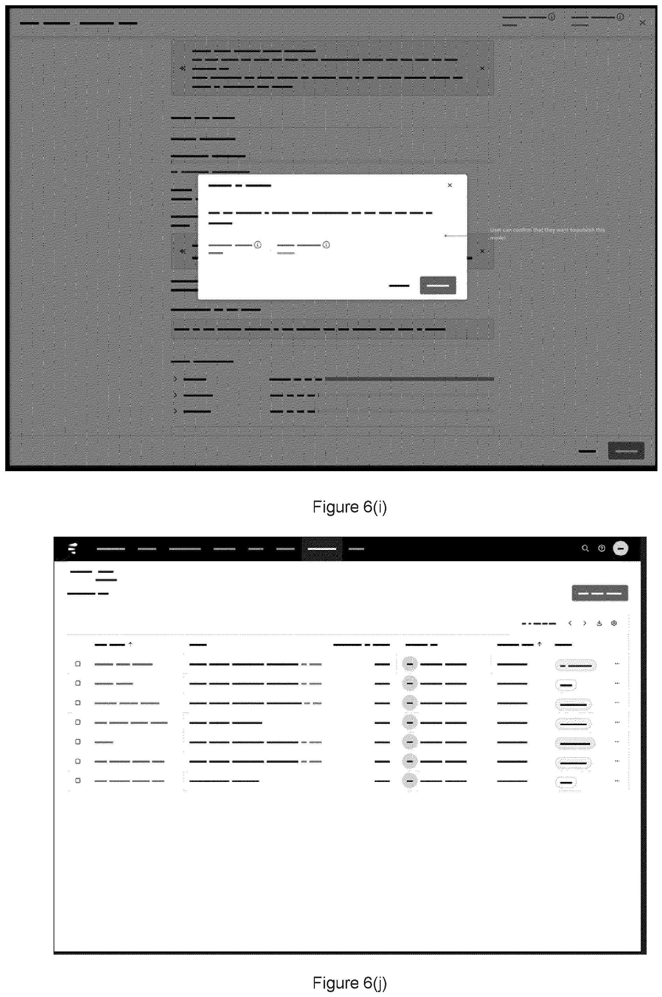

- Figure 6(i) - Show Operational Mode (e.g., transition from Build State to Publish State);
- Figure 6(j) - Model list with confirmation message to indicate that a User has published a model;
   ∘ Model list with confirmation message: Show status = complete, as an example;
- Dashboard Screens: Figures 7(a) through 7(g) are diagrams illustrating example charts or displays that may be generated by the system based on the extracted data or information to assist a user in understanding trends or aggregated data from the agreements or other form of documents.

The data/document processing flow(s) disclosed and/or described herein represent a change to conventional approaches to performing data extraction, and provide one or more of the following benefits:
- Removing the dependency on clauses - because the system is using embeddings and finding the most relevant embeddings, users no longer have to say "look in Clause X" for the answer or have a clause model trained;
- Allows users to create models in a more natural flow by asking the question they want answered across their documents and then going through steps to automate that process by building a model and using it to extract data and information;
- The underlying technology and platform serve as a base for useful functionality, including advanced Conversational AI to enable a user to engage in a "chat" with a document and ask questions about the document or across a corpus of documents. This capability enables a user to (among other benefits)
   ∘ View a document (or portion of one) to understand answers to business or legal questions and get those answers more quickly and more accurately than when using a conventional approach; and
   ∘ Use natural language to search across a corpus of documents, instead of having to learn a set of terms or functions.

In some embodiments, the system may present a user with one or more options with regards to the scope of the processing, a query representing the information to be extracted from the documents in the scope of documents, a query specific to a single document, or a suggested expansion of information found in one document to determine if that information is found in other documents.

As non-limiting examples, these options may be represented by one or more of the following UX/UI features or functions:
- Set scope: may be context specific for which it should default to
   ∘ Current document;
   ∘ Select documents;
   ∘ All documents;
- Queries/questions applicable to all documents
   ∘ Show me all the contracts that...;
   ∘ Do I have an active NDA with ...;
   ∘ What are my current agreements with...;
   ∘ Have I ever agreed to ...
- Query/question applicable to an individual document
   ∘ Summarize this document;
   ∘ Does this contract allow me to...?
   ∘ Based on this contract, how do I...?
   ∘ Explain this section of the contract to me:
   ∘ How is ... defined in this contract?
   ∘ Detailed examples:
      ▪ When can I terminate this contract?
      ▪ Where should I send notices to?
      ▪ What are the carve outs from limitation of liability?
- Transition from an individual document to all documents with one or more of the following queries/questions
   ∘ Individual Document: What is the payment term in this agreement?
   ∘ All Documents: And do I have any other agreements with this party that have different terms?

In one embodiment, once a model is trained and/or published, the following information may be provided to a user or system administrator for each model:
- Primary information (e.g., shown in a table)
   ∘ Model name (this may be a default value tied to a target field name);
   ∘ Target Field (the field the model is populating);
   ∘ Number of documents the model has run on;
   ∘ Scope: description of filter(s) used to set which documents a model is executed on;
   ∘ Last modified by;
   ∘ Last modified date (default sort descending);
   ∘ Status (e.g., Published, In Progress, Suspended);
- Secondary information (and possible actions)
   ∘ Number of documents in scope based on criteria set above;
   ∘ Number of documents in scope that model has run on;
   ∘ Number of documents in scope that model has not run on;
      ▪ Action - ability to trigger the model to run on those documents;
   ∘ Number of documents where data was extracted;
   ∘ Number of fields populated by the model (i.e., where values were extracted from documents);
   ∘ Created by;
   ∘ Created date;
   ∘ Last run date;
- Special state(s)
   ∘ Information for when model is initializing/in initial publish mode to show its progress;
- Model Status
   ∘ Draft - models are saved in a draft state to save a user's progress. Changes during model creation are auto saved on a regular basis (e.g., every 10 seconds or upon browser closing) instead of requiring the user to save their progress;
   ∘ Published | Initializing - model is published and is completing its initial run on all existing documents that meet scope criteria;
   ∘ Published | Live - model is published and has completed its initial run on all existing documents that meet criteria. It will now run on new uploads going forward;
   ∘ Published | Modified - model is in a published state but has been modified and has not been republished since changes were made;
   ∘ Suspended - model has been paused and will not run on any documents it currently has not run on;
- Individual Actions a user can take regarding an existing model
   ∘ Select and view in full;
   ∘ Secondary actions
      Edit Model;
      Test Model;
      Change model status;
- Change model status (e.g., suspend if unpublished);
- Delete (with applicable guardrails/warnings).

As further non-limiting examples of how a user may interact with the disclosed system and processes, an embodiment may implement one or more of the following functions and capabilities:
- Chat and ask questions across all documents in a set of documents (i.e., perform a natural language search);
   ∘ Ask questions about an accessed document, including IT, HR, or other service ticket content;
   ∘ What are the workflows associated with this document? - this may indicate how a document is used, who accesses the document, or other information of value to a user in deciding a configuration parameter or other aspect of the process flow;
- Multi-field approaches (one question being used to initiate a process to populate multiple fields);
   ∘ E.g., is this document subject to online terms and conditions? If yes, extract the URL to them;
- Allow users to ask multiple questions at the same time (e.g., reusing previously asked questions or saved questions);
- Handling of additional field types (e.g., to include more specific field types like address fields, URLs, SKU numbers, SSNs or ID numbers, monetary value and currency combinations, or time periods);
- Handling of table-style data;
- Chat History - the ability to share/access a history across multiple users using filters and appropriate permissions;
- Use of multiple models per field, and handling conflicts if they arise. For example, these may be resolved via a model ranking mechanism with regards to one or more metrics or domains if multiple models are populating the same field;
- Model export and import and conversion to Json or other exportable/importable formats;
- Advanced permissions - ability to lock models and enable or disable user collaboration on models;
- Enable chat with Document Groups to get questions answered about the broaderaspects of what is described in a document;
- Support data extraction into dropdown fields;
   ∘ E.g., SKU ID, Client ID, or Geographic regions;
   ∘ Reporting for data governance requirements or tasks;
- Auto suggest questions based on type ahead and previous questions.

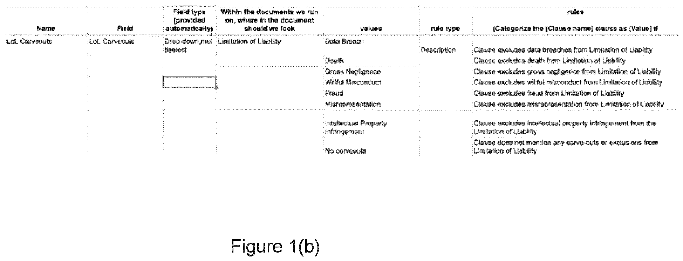

As an example, Figure 1(b) is a Table illustrating an output produced by a model that was requested to identify and classify carveouts that limit liability in a set of documents. As shown in the figure, the resulting Table includes Field and Field Type, Field Values (Values), and an applicable rule or explanation for why that value was selected (Rules).

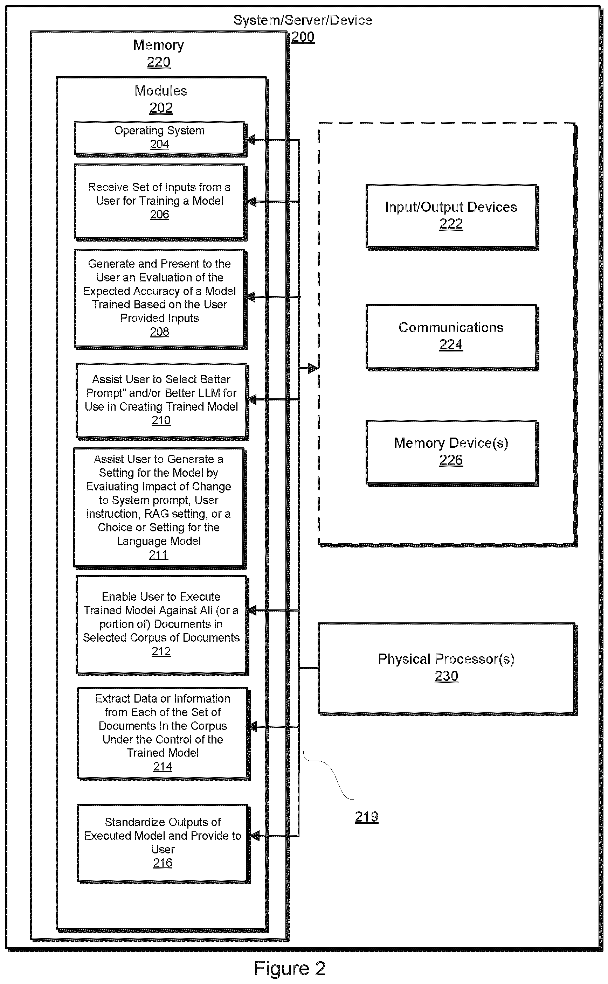

Figure 2 is a diagram illustrating elements or components that may be present in a computing device or system configured to implement a method, process, function, or operation in accordance with an embodiment of the system and methods disclosed and/or described herein. As noted, in some embodiments, the system and methods may be implemented in the form of an apparatus that includes a processing element and set of executable instructions. The executable instructions may be part of a software application and arranged into a software architecture.

In general, an embodiment may be implemented using a set of software instructions that are designed to be executed by a suitably programmed processing element (such as a GPU, CPU, TPU, QPU, microprocessor, processor, co-processor, or controller, as non-limiting examples). In a complex application or system such instructions are typically arranged into "modules" with each such module (or sub-module) typically performing a specific task, process, function, or operation. The entire set of modules may be controlled or coordinated in their operation by an operating system (OS) or other form of organizational platform.

Each application module or sub-module may correspond to a particular function, method, process, or operation that is implemented by the module or sub-module. Such function, method, process, or operation may include those used to implement one or more aspects of the disclosed and/or described systems, apparatuses, and methods.

The application modules and/or sub-modules may include a suitable computer-executable code or set of instructions (e.g., as would be executed by a suitably programmed processor, microprocessor, or CPU), such as computer-executable code corresponding to a programming language. For example, programming language source code may be compiled into computer-executable code. Alternatively, or in addition, the programming language may be an interpreted programming language such as a scripting language.

The modules may contain one or more sets of instructions for performing a method or function described with reference to the Figures, and the disclosure and/or description of the functions and operations provided in the specification. These modules may include those illustrated but may also include a greater number or fewer number than those illustrated. As mentioned, each module may contain a set of computer-executable instructions. The set of instructions may be executed by a programmed processor contained in a server, client device, network element, system, platform, or other component.

A module may contain instructions that are executed by a processor contained in more than one of a server, client device, network element, system, platform, or other component. Thus, in some embodiments, a plurality of electronic processors, with each being part of a separate device, server, or system may be responsible for executing all or a portion of the software instructions contained in an illustrated module or sub-module. Thus, although Figure 2 illustrates a set of modules which taken together perform multiple functions or operations, these functions or operations may be performed by different devices or system elements, with certain of the modules (or instructions contained in those modules) being associated with those devices or system elements.

As shown in Figure 2, system 200 may represent a server or other form of computing or data processing system, platform, or device. Modules 202 each contain a set of executable instructions, where when the set of instructions is executed by a suitable electronic processor or processors (such as that indicated in the figure by "Physical Processor(s) 230"), system (or server, platform, or device) 200 operates to perform a specific process, operation, function, or method.

Modules 202 are stored in a (non-transitory) memory 220, which typically includes an Operating System module 204 that contains instructions used (among other functions) to access and control the execution of the instructions contained in other modules. The modules 202 stored in memory 220 are accessed for purposes of transferring data and executing instructions by use of a "bus" or communications line 218, which also serves to permit processor(s) 230 to communicate with the modules for purposes of accessing and executing a set of instructions.

Bus or communications line 218 also permits processor(s) 230 to interact with other elements of system 200, such as input or output devices 222, communications elements 224 for exchanging data and information with devices external to system 200, and additional memory devices 226.

For example, Modules 202 may contain computer-executable instructions which when executed by a programmed processor cause the processor or a device in which it is implemented to perform the following processes, methods, functions, or operations:
- Receive a Set of Inputs from a User for Training a Model (e.g., an LLM) (as suggested by module 206);
- Generate and Present to the User an Evaluation of the Expected Accuracy of a Model Trained Based on the User Provided Inputs (module 208);
- Assist User to Select a "Better" Prompt and/or "Better" LLM for Use in Creating a Trained Model to be Published (module 210);
- Assist User to Generate a Setting for the Model by Evaluating Impact of Change to System prompt, User instruction, RAG setting, or a Choice or Setting for the Language Model (module 211);
- When Satisfied with a Model's Performance, Enable User to "Publish" the Trained Model and Execute It Against All (or a portion of) Documents in a Selected Corpus of Documents (module 212);
- Extract Data or Information (e.g., a value or values) from Each of the Set of Documents in the Corpus Under the Control of the Model (module 214); and
- Standardize Outputs of Model and Provide to User (module 216).

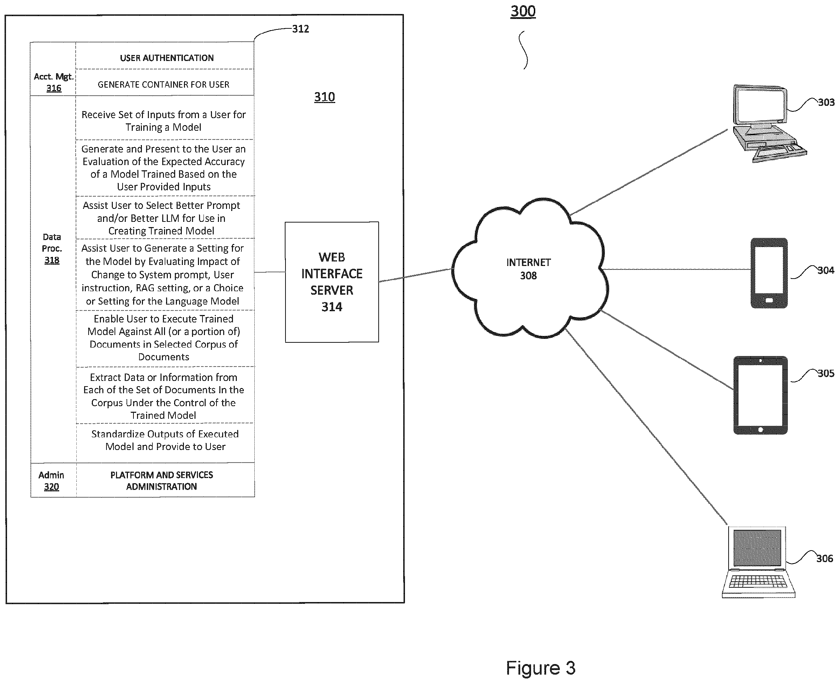

As mentioned, in some embodiments, the systems and methods disclosed and/or described herein may provide services through a Software-as-a-Service (SaaS) or multi-tenant platform. The platform provides access to multiple entities, each with a separate account and associated data storage. Each account may correspond to a user, an entity, a set or category of entities, a set or category of users, a set or category of documents, a domain or sub-domain, an industry, or an organization, for example. Each account may access one or more services, a set of which are instantiated in their account, and which implement one or more of the methods or functions disclosed and/or described herein. Figures 3-5 are diagrams illustrating an architecture for a multi-tenant or SaaS platform that may be used in implementing an embodiment of the systems and methods disclosed herein.

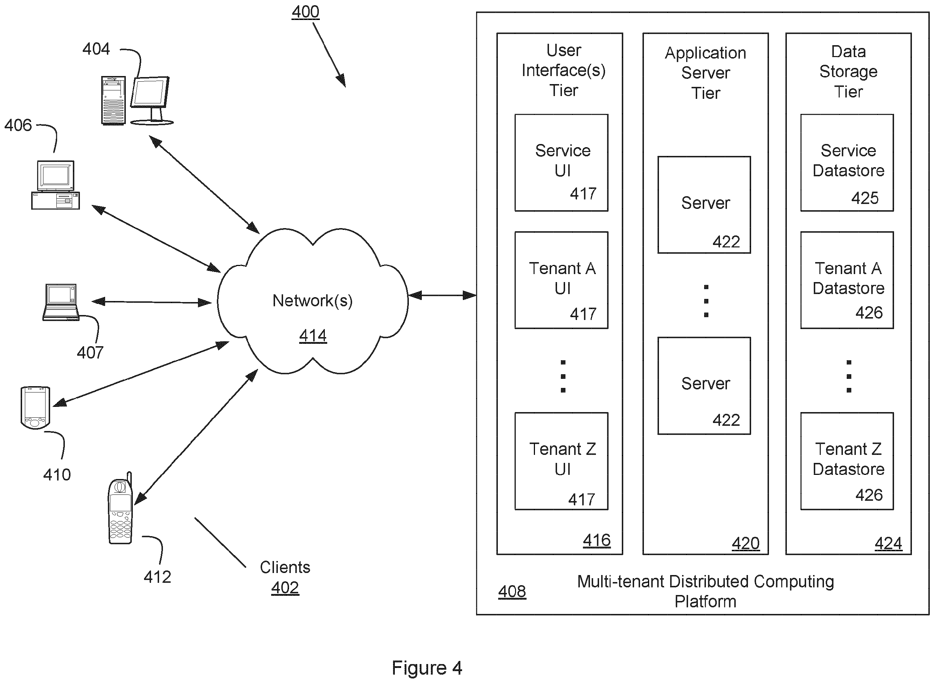

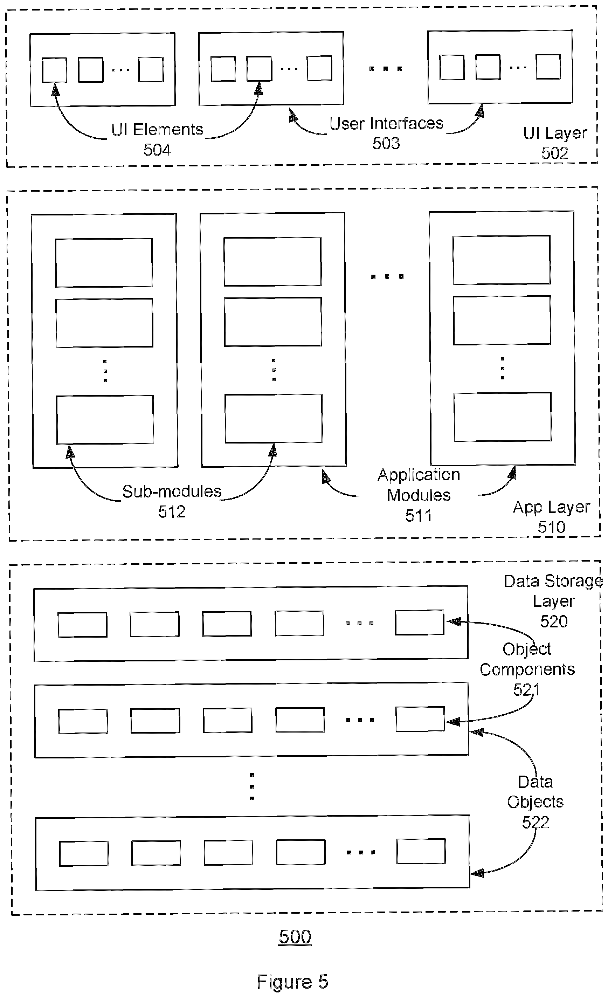

Figure 3 is a diagram illustrating a SaaS system in which an embodiment of the disclosure may be implemented. Figure 4 is a diagram illustrating elements or components of an example operating environment in which an embodiment of the disclosure may be implemented. Figure 5 is a diagram illustrating additional details of the elements or components of the multi-tenant distributed computing service platform of Figure 4, in which an embodiment of the disclosure may be implemented.

In some embodiments, the system or service(s) disclosed and/or described herein may be implemented as micro-services, processes, workflows, or functions performed in response to requests. The micro-services, processes, workflows, or functions may be performed by a server, data processing element, platform, or system. In some embodiments, the services may be provided by a service platform located "in the cloud". In such embodiments, the platform is accessible through APIs and SDKs.

The described document processing and evaluation services may be provided as micro-services within the platform for each of multiple users or companies. The interfaces to the micro-services may be defined by REST and GraphQL endpoints. An administrative console may allow users or an administrator to securely access the underlying request and response data, manage accounts and access, and in some cases, modify the processing workflow or configuration.

Note that although Figures 3-5 illustrate a multi-tenant or SaaS architecture that may be used for the delivery of business-related or other applications and services to multiple accounts/users, such an architecture may also be used to deliver other types of data processing services and provide access to other applications. For example, such an architecture may be used to provide the document processing and evaluation processes disclosed and/or described herein.

Although in some embodiments, a platform or system of the type illustrated in Figures 3-5 may be operated by a 3^{rd} party provider, in other embodiments, the platform may be operated by a provider and a different source may provide the applications or services for users through the platform.

Figure 3 is a diagram illustrating a system 300 in which an embodiment of the disclosure may be implemented or through which an embodiment of the services disclosed and/or described herein may be accessed. In accordance with the advantages of an application service provider (ASP) hosted business service system (such as a multi-tenant data processing platform), users of the services may comprise individuals, businesses, organizations, or other entities, as non-limiting examples.

A user may access the platform services using a suitable client, where non-limiting examples of suitable client devices include desktop computers 303, smartphones 304, tablet computers 305, or laptop computers 306. In general, a client device having access to the Internet may be used to provide a request or text message requesting a service (such as the processing of a document). Users interface with the service platform across the Internet 308 or another suitable communications network or combination of networks.

System 310, which may be hosted by a third party, may include a set of services 312 and a web interface server 314, coupled as shown in Figure 3. It is to be appreciated that either or both of services 312 and the web interface server 314 may be implemented on one or more different hardware systems and components, even though represented as singular units in Figure 3. Services 312 may include one or more functions or operations for the creation, evaluation, publishing, and use of a model to extract data or information from a document or documents, as non-limiting examples.

In some embodiments, the set of applications or services available to a user may include one or more that perform the functions and methods disclosed and/or described herein. As examples, in some embodiments, the set of applications, functions, operations or services 312 made available through the platform or system 310 may include:
- account management services 316, such as
   ∘ a process or service to authenticate a person or entity requesting data processing services (such as credentials, proof of purchase, or verification that the customer has been authorized by a company to use the services provided by the platform);
   ∘ a process or service to receive a request for processing of a set of documents;
   ∘ an optional process or service to generate a price for the requested service or a charge against a service contract;
   ∘ a process or service to generate a container or instantiation of the requested processes for a user/customer, where the instantiation may be customized for a particular company; and
   ∘ other forms of account management services;
- a set of processes or services 318, such as a process or service to:
   ∘ Receive a Set of Inputs from a User for Training a Model (e.g., an LLM);
   ∘ Generate and Present to the User an Evaluation of the Expected Accuracy of a Model Trained Based on the User Provided Inputs;
   ∘ Assist User to Select a "Better" Prompt" and/or "Better" LLM for Use in Creating a Trained Model to be Published;
   ∘ Assist User to Generate a Setting for the Model by Evaluating Impact of Change to System prompt, User instruction, RAG setting, or a Choice or Setting for the Language Model;
   ∘ When Satisfied with a Model's Performance, Enable the User to "Publish" the Model and Execute It Against All (or a portion of) Documents in a Selected Corpus of Documents;
   ∘ Extract a Data or Information (e.g., a value or values) from Each of the Set of Documents in the Corpus Under the Control of the Trained Model; and
   ∘ Standardize Outputs of the Model and Provide to the User;
- administrative services 320, such as
   ∘ a process or services to enable the provider of the data processing and services and/or the platform to administer and configure the processes and services provided to users.

The platform or system shown in Figure 3 may be hosted on a distributed computing system made up of at least one, but typically multiple, "servers." A server is a physical computer dedicated to providing data storage and an execution environment for one or more software applications or services intended to serve the needs of the users of other computers that are in data communication with the server, for instance via a public network such as the Internet. The server, and the services it provides, may be referred to as the "host" and the remote computers, and the software applications running on the remote computers being served may be referred to as "clients." Depending on the computing service(s) that a server offers it could be referred to as a database server, data storage server, file server, mail server, print server, or web server (as examples).

Figure 4 is a diagram illustrating elements or components of an example operating environment 400 in which an embodiment of the disclosure may be implemented. As shown, a variety of clients 402 incorporating and/or incorporated into a variety of computing devices may communicate with a multi-tenant service platform 408 through one or more networks 414.

For example, a client may incorporate and/or be incorporated into a client application (e.g., software) implemented or executed at least in part by one or more of the computing devices. Examples of suitable computing devices include personal computers, server computers 404, desktop computers 406, laptop computers 407, notebook computers, tablet computers or personal digital assistants (PDAs) 410, smart phones 412, cell phones, and consumer electronic devices incorporating one or more computing device components (such as one or more electronic processors, microprocessors, central processing units (CPU), or controllers). Examples of suitable networks 414 include networks utilizing wired and/or wireless communication technologies and networks operating in accordance with any suitable networking and/or communication protocol (e.g., the Internet).

The distributed computing service/platform (which may also be referred to as a multi-tenant data processing platform) 408 may include multiple processing tiers, including a user interface tier 416, an application server tier 420, and a data storage tier 424. The user interface tier 416 may maintain multiple user interfaces 417, including graphical user interfaces and/or web-based interfaces. The user interfaces may include a default user interface for the service to provide access to applications and data for a user or "tenant" of the service (depicted as "Service Ul" in the figure), as well as one or more user interfaces that have been specialized/customized in accordance with user specific requirements (e.g., represented by "Tenant A UI", ..., "Tenant Z Ul" in the figure, and which may be accessed via one or more APIs).

The default user interface may include user interface components enabling a tenant to administer the tenant's access to and use of the functions and capabilities provided by the service platform. This may include accessing tenant data, launching an instantiation of a specific application, or causing the execution of specific data processing operations, as non-limiting examples.

Each application server or processing tier 422 shown in the figure may be implemented with a set of computers and/or components including computer servers and processors, and may perform various functions, methods, processes, or operations as determined by the execution of a software application or set of instructions. The data storage tier 424 may include one or more data stores, which may include a Service Data store 425 and one or more Tenant Data stores 426. Data stores may be implemented with a suitable data storage technology, including structured query language (SQL) based relational database management systems (RDBMS).

Service Platform 408 may be multi-tenant and may be operated by an entity to provide multiple tenants with a set of business-related or other data processing applications, data storage, and functionality. For example, the applications and functionality may include providing web-based access to the functionality used by a business to provide services to end-users, thereby allowing a user with a browser and an Internet or intranet connection to view, enter, process, or modify certain types of information.

Such functions or applications are typically implemented by one or more modules of software code/instructions that are maintained on and executed by one or more servers 422 that are part of the platform's Application Server Tier 420. As noted with regards to Figure 3, the platform system shown in Figure 4 may be hosted on a distributed computing system made up of at least one, but typically multiple, "servers."

As mentioned, rather than build and maintain such a platform or system themselves, a business may utilize a platform or system provided by a third party. A third party may implement a business system/platform as described in the context of a multi-tenant platform, where individual instantiations of a business' data processing workflow (such as the document processing and data extraction model formation disclosed and/or described herein) are provided to users, with each company/business representing a tenant of the platform. One advantage to such multi-tenant platforms is the ability for each tenant to customize their instantiation of the data processing workflow to that tenant's specific business needs or operational methods.

Figure 5 is a diagram illustrating additional details of the elements or components of the multi-tenant distributed computing service platform of Figure 4, in which an embodiment of the disclosure may be implemented. In general, an embodiment may be implemented using a set of software instructions that are designed to be executed by a suitably programmed processing element (such as a CPU, microprocessor, processor, controller, or computing device). In a complex system such instructions are typically arranged into "modules" with each such module performing a specific task, process, function, or operation. The entire set of modules may be controlled or coordinated in their operation by an operating system (OS) or other form of organizational platform.

The example architecture 500 of a multi-tenant distributed computing service platform illustrated in Figure 5 includes a user interface layer or tier 502 having one or more user interfaces 503. Examples of such user interfaces include graphical user interfaces and application programming interfaces (APIs). Each user interface may include one or more interface elements 504. For example, users may interact with interface elements to access functionality and/or data provided by application and/or data storage layers of the example architecture.

Examples of graphical user interface elements include buttons, menus, checkboxes, drop-down lists, scrollbars, sliders, spinners, text boxes, icons, labels, progress bars, status bars, toolbars, windows, hyperlinks, and dialog boxes. Application programming interfaces may be local or remote and may include interface elements such as parameterized procedure calls, programmatic objects, and messaging protocols.

The application layer 510 may include one or more application modules 511, each having one or more associated sub-modules 512. Each application module 511 or sub-module 512 may correspond to a function, method, process, or operation that is implemented by the module or sub-module (e.g., a function or process related to providing data processing and other services to a user of the platform). Such function, method, process, or operation may include those used to implement one or more aspects of the disclosed system and methods, such as for one or more of the processes or functions disclosed and/or described with reference to the specification and Figures:
- Receive a Set of Inputs from a User for Training a Model (e.g., an LLM);
- Generate and Present to the User an Evaluation of the Expected Accuracy of a Model Trained Based on the User Provided Inputs;
- Assist User to Select a "Better" Prompt" and/or "Better" LLM for Use in Creating a Trained Model to be Published;
- Assist User to Generate a Setting for the Model by Evaluating Impact of Change to System prompt, User instruction, RAG setting, or a Choice or Setting for the Language Model;
- When Satisfied with a Model's Performance, Enable the User to "Publish" the Model and Execute It Against All (or a portion of) Documents in a Selected Corpus of Documents;
- Extract a Data or Information (e.g., a value or values) from Each of the Set of Documents in the Corpus Under the Control of the Trained Model; and
- Standardize Outputs of the Model and Provide to the User.

The application modules and/or sub-modules may include any suitable computer-executable code or set of instructions (e.g., as would be executed by a suitably programmed processor, microprocessor, or CPU), such as computer-executable code corresponding to a programming language. For example, programming language source code may be compiled into computer-executable code. Alternatively, or in addition, the programming language may be an interpreted programming language such as a scripting language. Each application server (e.g., as represented by element 422 of Figure 4) may include each application module. Alternatively, different application servers may include different sets of application modules. Such sets may be disjoint or overlapping.

The data storage layer 520 may include one or more data objects 522 each having one or more data object components 521, such as attributes and/or behaviors. For example, the data objects may correspond to tables of a relational database, and the data object components may correspond to columns or fields of such tables. Alternatively, or in addition, the data objects may correspond to data records having fields and associated services. Alternatively, or in addition, the data objects may correspond to persistent instances of programmatic data objects, such as structures and classes. Each data store in the data storage layer may include each data object. Alternatively, different data stores may include different sets of data objects. Such sets may be disjoint or overlapping.

Note that the example computing environments depicted in Figures 3-5 are not intended to be limiting examples. Further environments in which an embodiment may be implemented in whole or in part include devices (including mobile devices), software applications, systems, apparatuses, networks, SaaS platforms, laaS (infrastructure-as-a-service) platforms, or other configurable components that may be used by multiple users for data entry, data processing, application execution, or data review (as non-limiting examples).

In addition to the specific example embodiments and use cases disclosed and/or described, there are other uses and contexts in which an embodiment may provide benefits. Further, there are alternative implementations and approaches that may provide benefits. As non-limiting examples, these may include one or more of the following functions, features, or capabilities:
- While the disclosed and/or described approach assumes saving the data to fields, it's possible to create approaches where it isn't saved to predefined fields and uses other data types for storage;
   ∘ These might include one or more of headers, separate documents, context caching, or other systems;
- Provide a user with additional tools to guide the "intelligence" with advanced options such as:
   ∘ Do you want the processing to be over inclusive or under inclusive?
   ∘ What should the process do if it's unsure (typically as determined by a threshold value of a metric)?
- While one or more embodiments are focused on a user defining and building models for extracting single values at a time, the disclosed and/or described approaches may be extended to extracting multiple values, including related values (e.g., all payment dates, the amounts, and invoice timeline for each payment according to the contract payment schedule), thereby enabling the building of a table of data out of what is in a document;
   ∘ In one example of this embodiment, the extraction process could be executed multiple times and then a final response assembled from those, or it could be executed once and returned in a Json that is then parsed to fill out multiple field values;
- To improve the accuracy of a model, the system may incorporate additional information from the document, from an LLM (such as one trained on specific to a domain, use case, or context), and in some cases an external source to improve or validate model performance;
   ∘ Link with external databases, such as a company database, to validate model outputs and determine if data extracted (when relevant to that database) matches what's in the database;
      ▪ e.g., if the system is extracting counterparty addresses and one knows the counterparty, the system or user can check if they match and if "yes", have higher confidence; if "no", potentially flag this output to the user to indicate it may need review;
- Add other dimensions or a prefilled text that includes options such as "be concise" or "be comprehensive";
- Pull out and recite exact text found and/or summarize an answer;
- Users can use an embodiment to extract dates/numbers, but may also (or instead) desire to use it for "classification"; or
- Based on the user provided inputs, can the system suggest an improvement?
   ∘ This might include improved or alternate instructions, prompts, or examples of extracted text, as non-limiting examples.

Note that in addition to assisting users to choose a "better" prompt or "better" LLM, embodiments also include a scenario where users provide instructions and rate some documents, and then an embodiment suggests "better" instructions and then, separate from instructions (which are one component of a prompt), the system selects an "optimal" prompt or LLM behinds the scenes or lets a user choose.

In one embodiment, the orchestration layer may also enable an operator of the disclosed and/or described system or platform to specify one or more LLMs that a client or set of clients are (or aren't) eligible to access and use (e.g., some clients can use LLMs overseas or won't allow use of OpenAI but will allow use of a more local LLM). Embodiments may also provide a flexible way to let clients add their own proprietary LLMs or use custom LLM API keys. This might be used to enable the operator to use clients' own LLM API keys for billing usage against their API within their "cloud" or other portion of the overall system or platform.

As disclosed and/or described herein, embodiments enable a user to identify and extract data from a set of documents using a conversational interface. The conversational interface may include functions to suggest improved inputs to a user or to transform user inputs into a preferred format. In this regard, the disclosed and/or described system or platform may include functions or capabilities to perform one or more of:
- Test or validate an initial set of user inputs and/or those suggested to the user by the system or platform backend;
- Evaluate the performance of a model or models against ground truth data provided by the user;
- Assist the user to select an optimal, better, or best LLM or other aspect of a model that will be executed against a corpus of documents; or
- Analyze or evaluate the possible relevance of a document prior to the document being used as part of a corpus (e.g., to conserve processing costs, such as by searching for the presence or absence of specific headings, terms, or phrases).

Embodiments have been disclosed and/or described that include one or more processes or techniques for improving the performance of aspects of the overall process of responding to a user's query. These include formulation of prompts, training and evaluation of a model, selection of an LLM, or selection of documents for processing by a trained model, as non-limiting examples.

In some embodiments, quality-of-service (QoS) considerations may also play a role in how queries or requests from multiple users are handled, what servers are used to process a user query or request, or what tasks are performed and in what order.

As non-limiting examples, scheduling of the execution of the processes required to generate a response to a user query or request may include one or more of the following:
- Whether a task is synchronous or asynchronous - where it may be desirable to give priority (if needed) to processing synchronous tasks or processes, such as model evaluations or conversational inputs. Other QoS related considerations may include:
   ∘ Ensure that the system is maximizing throughput when requests come in so that the queue is relatively clear for the next batch;
   ∘ Ensure that no one customer/user can take up the queue to the detriment of other customers/users (although this may need to be specified in terms of a metric);
   ∘ Ensure that no one customer has to wait too long for their model to be available to process a corpus of documents (via load balancing, or temporary suspension of certain processing tasks, as examples);
- Separation of queues by expected "bottlenecks";
- Setting a maximum utilization value for each LLM used - this can "reserve" some amount of capacity for desired functions, such as synchronous processes;
- Distribution of tasks between local and more remote servers based on nature of task and characteristic of client;
   ∘ This may involve consideration of synchronous versus asynchronous tasks or processes, or a user with geographic restrictions (arising from data privacy concerns, as an example);
- Status of processing of documents in a corpus at a specific time;
- Prioritization of a specific model or models based on a temporary setting (e.g., for a demonstration or to satisfy a QoS agreement).

In some embodiments, additional functionality may be incorporated to improve the effectiveness of specific user inputs. As non-limiting examples, these may include one or more of the following:
- As mentioned, use of a parsing operation to isolate formatting from non-formatting instructions may be helpful in producing more relevant outputs. This would involve parsing an instruction into 'instructions on what to extract' and 'instructions on formatting' to produce better performance on retrieval by removing parts from instructions that are not relevant to finding the right part of a document. This is expected to make the use of RAG more targeted. This occurs in the back end so that users can still provide whatever they want as the input;
   ∘ In one embodiment, this approach uses an LLM to sanitize the data but could employ other approaches such as a classifier to first classify whether there even is this extra data, and simpler parsing tools to parse out formatting from non-formatting instructions;
- Use of dynamically adjustable settings for how RAG is used to retrieve text from a document. These can be user/customer and/or model specific;
   ∘ Because identifying the relevant part of a document for the processing to "read" is a factor in achieving a high accuracy outcome, dynamic RAG settings may be used to vary the amount of text retrieved based on consideration of the length of the document being reviewed. For example, if it's a longer document, the process might pull out more chunks of text for analysis. If many "chunks" have close similarity levels (so that it's hard to know exactly where a cutoff should be) extract extra to be safer;
   ∘ Can vary the length of the chunks (e.g., 256 vs 512 words or tokens) based on the client/user model and what is found to work "best";
   ∘ Employ extra tools to ensure the retrieved text is high quality. This could include ensuring that the RAG processing (which is configured to pull a set number of chunks) does not cut off mid paragraph, or removing extra text that might get stuck in between paragraphs (e.g., headers/footers, page numbers) so that the process is "reading" the most relevant text and has a fuller context, and not a partial context;
- Dynamic token allowances and size;
   ∘ Some models require longer responses from LLMs (e.g., there could be a list of 100 items returned, or more explainability needed) while some require shorter responses. Shorter is often preferable as it reduces cost (so one could set a max # of tokens for LLM responses) but users also desire a high level of accuracy. So as part of a boosting process, the system may try different # of tokens allowed up to the size of a context window (which can be up to 2 million long depending on the LLM), and then optimize the context window accordingly;
- Detection of language as part of selecting the LLM;
   ∘ Certain LLMs work or work best with certain languages - so as part of the processing pipeline, identify the language of the text in a corpus document and provide an "alternate path" for those documents to go through if the LLM being used for that model is known to not work as well with that (non-English) language;
   ∘ This means the same model could use different LLMs - one for one language, another for a different language based on which model (of those capable for each language) having performed the best;
- Optimizing not just prompts but RAG or other settings;
   ∘ While the system is configured with general settings for RAG that include how many chunks to pull, and how long of a chunk to pull, once a user has provided a small number of examples of their model output and an indication of the correctness or incorrectness of those outputs (which is a number that could be changed in some versions of the system), then in addition to experimenting with which LLM, which system prompt, and which specific instructions to run with, the system can also perform behind the scenes "experiments" for RAG settings by trying out longer vs. shorter chunks, and more vs. fewer chunks, or similar variations to find the optimal RAG configurations and optimal amount of text to feed LLMs, specific to the custom model, and the customer's specific documents;
- Release of new versions and use of those to respond to user queries or requests;
   ∘ It is known that the state of the art for LLM development and training is changing, and it is desirable to be able to release new LLMs and system prompts that are believed to be overall improvements to current ones. However, while something might be a general improvement, it could make some models worse. To address this, an embodiment may implement the following:
      ▪ Lock in the system prompt and LLM for a model at the time of publishing - this means that the updating of prompts or LLMs is applied to new models or versions, so the results obtained from existing models are reliable;
      ▪ Use of a "strict improvement" criteria or mechanism to know whether to update a prompt or instruction for a previous model:
         - Given a model already published, evaluate it using the new prompt or instructions and only keep the model if it is strictly better- meaning it gets both equal or higher accuracy overall and it doesn't get a previously correct value wrong;
      ▪ Can also leverage the disclosed and/or described orchestration layer to release new system prompts or LLMs into production models without having to validate they are more accurate than previous versions because the orchestration layer will ensure that they will only become the prompt or LLM used if they can outperform the other LLMs/prompts when the model goes through the orchestration layer;
- Fair scheduling to ensure no one client utilizes too much of the queue;
   ∘ The disclosed and/or described system is a powerful tool that lets users publish an AI model that doesn't just look for the most relevant documents but will review each document. This means that for an example of a client with 1 million documents, when they publish a model, the system needs to deploy an LLM pipeline to read each one in a timely manner, while also ensuring that one client publishing doesn't impede other clients' ability to publish models;
   ∘ The scheduling approach used by the system may consider multiple factors (system utilization, synchronous versus asynchronous tasks, throughput, user wait time, client/customer restrictions arising from their location, or priority of a client to meet an agreed to service level, as non-limiting examples). In addition, the overall system includes multiple regions where the LLMs are hosted, as this enables higher rate limits than what is publicly available in any one region. The system also has the ability to quickly introduce more LLMs that follow the same fair scheduling pattern. The system orchestration layer also ensures that a task doesn't use the scarcest and most expensive LLMs when a cheaper or more readily available LLM will do. This is a result of using cost and availability as tiebreakers when two or more LLMs achieve similarly high accuracy;
- Instructions improvement;
   ∘ As part of improving a system prompt (which includes user instructions), can use LLMs to evaluate each response a user rated against what the system provided and explain why each chose their answer, the reason for any difference, and propose changes to the instructions to reduce any differences between the ground truth (user rating) and the system's answer. Then, a separate step takes the various feedback and provides a holistic new system prompt or instruction that takes this additional information into account;
      ▪ This step may be performed multiple times per model with different LLMs, "temperature" settings, and system prompts to result in variability and drive more opportunities to identify the best instructions and prompts;
- Evaluating accuracy or utility of a model by indirect considerations;
   ∘ Even though users perform an evaluation of a model pre-publication, no model is 100% accurate, and users typically want to know (1) how their model is doing on a larger population of documents and not just the sample data set, and (2) which documents to review and look at. Unfortunately, one can't rely on LLMs to provide measures such as probability scores or indicate which result they are most sure of because at present, there are no trustworthy probability scores for LLM outputs. To address this problem, several different approaches may be used, alone or in combination:
      ▪ Tracking post-publish stickiness - if a user publishes a model and it works well at the time of publishing (or they think it does) how do they find out if they're wrong or if it changes due to changing the type of data they provide as inputs to the system?
         - Track how well the values the processing extracts are remaining the same - for each document evaluated, track the following and use this information to generate an upper bound on the accuracy of the processing:
            ▪ whether a user has clicked into and seen the document;
            ▪ whether they've validated the result to confirm the accuracy of the output;
            ▪ whether users have overwritten an output;
            ▪ provide this data over time, so that if the ratio of "viewed:changed" starts shifting relatively suddenly, that may imply a change in the type of data coming in and indicate that a model should be revisited;
         - As an example, assume the following values:
            ▪ The system ran on 100,000 documents and produced answers for all 100,000 documents;
            ▪ Of those 100K, users have looked at 5,000;
            ▪ Users have validated 100;
            ▪ Users have changed 200
            ▪ This means users have changed 200 out of 5,000 they looked at - so an upper bound of accuracy is 96% (since users won't necessarily validate any that are correct, as people are more likely to change incorrect than validate correct);
            ▪ This is an imperfect representation but can give ranges and ideas to admins of how accurate their model might be;
- Error handling;
   ∘ To identify documents that may be worth considering for a second pass or review, identify situations that indicate an error was more likely, including;
      ▪ The processing produced multiple outputs when normally there should be only one output;
      ▪ The output was blank or inconclusive;
      ▪ Output is conflicting and may be showing an inconsistency, i.e., typical field outputs are one of A, B, or C, but in this case the model output "X" (i.e., possibly signifying an outlier);
      ▪ Output is unique/based on text that is drastically different than the text used to answer the same question in other documents;
      ▪ RAG found a high number of relevant chunks (which indicates a document may have several places that discuss the topic and may confuse the LLM);
      ▪ Allow users to specify criteria that triggers a review of the system output and/or introduce automatic "tests" or evaluations to identify potential errors;
- Model libraries and model sharing (i.e., a model marketplace);
   ∘ Because each model is unique and the result of experiments and tests, producing one is still work. Once a user completes a model, a "marketplace" can be established where the assignee, partners, or customers can publish models that they've built for others to use;
      ▪ These models would contain no proprietary data but only the end resulting configuration of various settings (RAG, chunk size, system prompt, user instructions, LLM choice(s), model name, field type, output type/info) and users would be able to then start using these new models more quickly;
      ▪ Such a marketplace could include letting users who publish models monetize them, get credit/recognition for them, or other forms of rewards or incentives.

As disclosed and/or described embodiments may include one or more processes for optimizing or improving an aspect of the process used to extract specific data from a corpus of documents. These aspects may include selection or generation of an LLM, prompts, instructions, examples, data formats, training approaches for a model, or other features of a document or the processing flow. In general, optimization may be guided by a quality-of-service goal, an accuracy metric, a computational "cost" of processing a document or corpus, or other relevant consideration.

Depending on the client, corpus, or other aspect of a task, the goal may be to achieve an "optimal" output based on a heuristic such as "achieve the highest possible accuracy, and, when accuracy is equivalent, choose the cheapest costing option", or "apply strict improvement to evaluate results". In some embodiments, multiple "test" cases may be executed that use different prompts, instructions, or examples to provide a set of data for use in selecting the "optimal" or "best" inputs or configuration parameters (such as for using RAG, selecting an LLM, choosing a field to populate with extracted data, or a number of documents to display to a user for evaluation of the processing). In some cases, this may include information regarding a client, a location, a location, a contractual quality of service (QoS), or other relevant consideration.

In some cases, the operational status of the system or platform may be considered when determining the "optimal" or "best" inputs or configuration parameters, such as by considering load balancing, distribution of processing tasks based on geographic location or user identity or expected computational cost and available alternatives.

Embodiments as disclosed and/or described herein can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

The disclosure includes the following clauses and embodiments:
1. A method for enabling a user to execute a query over a set of documents, comprising:
   receiving a set of inputs from a user for training a model;
   generating and presenting to the user an evaluation of the expected accuracy of a model trained based on the user inputs;
   assisting the user to select a prompt or language model for the model trained based on the user inputs;
   assisting the user to generate a setting for the model trained based on the user inputs by evaluating an impact of a change to one or more of a system prompt, a user instruction, a RAG setting, or a choice or setting for the language model;
   enabling the user to execute the trained model against a set of documents;
   extracting data or information from each document of the set of documents under control of the trained model;
   standardizing the extracted data or information from each document; and
   providing the standardized extracted data or information to the user.
2. The method of clause 1, further comprising presenting the generated setting to the user and receiving from the user a selection of the setting.
3. The method of clause 1, further comprising storing the standardized extracted data or information for later retrieval.
4. The method of clause 1, wherein providing the standardized extracted data or information to the user further comprises presenting a table, chart, or dashboard to the user.
5. The method of clause 1, wherein the received inputs comprise one or more of:
   what field the user wants to populate in an output;
   what documents to include in the set of documents; and
   one or more instructions that indicate the task the user is asking the trained model to perform.
6. The method of clause 1, wherein generating and presenting to the user an evaluation of the expected accuracy of a model trained based on the user inputs further comprises presenting to the user:
   a document in the selected set of documents;
   the model's output when executed against the presented document in response to the user's inputs; and
   a tool to enable the user to indicate that the model's output is either correct, incorrect, or to be skipped.
7. The method of clause 6, wherein if the user indicates the model output is correct, then a next document is presented to the user for evaluation, and if the user indicates the model output is incorrect, then the user is asked to provide the correct answer and optionally to provide an explanation for why the model's answer is incorrect.
8. The method of clause 7, wherein if the model output is incorrect, the method further comprises receiving from the user an indication of where the correct output is located in a document.
9. The method of clause 1, wherein standardizing the outputs of the executed model further comprises executing parsing logic that operates to separate the extracted data or information from a longer response and if necessary, standardize it into a structured form of data.
10. The method of clause 1, wherein assisting the user to select a prompt or language model for the model trained based on the user inputs further comprises executing the model being trained using a plurality of prompts or language models to determine a prompt or language model that provides an improved performance.
11. A system for enabling a user to execute a query over a set of documents, comprising:
   one or more electronic processors configured to execute a set of computer-executable instructions; and
   a non-transitory computer-readable medium including the set of computer-executable instructions, wherein when executed, the instructions cause the one or more electronic processors to
      receive a set of inputs from a user for training a model;
      generate and present to the user an evaluation of the expected accuracy of a model trained based on the user inputs;
      assist the user to select a prompt or language model for the model trained based on the user inputs;
      assist the user to generate a setting for the model trained based on the user inputs by evaluating an impact of a change to one or more of a system prompt, a user instruction, a RAG setting, or a choice or setting for the language model;
      enable the user to execute the trained model against a set of documents;
      extract data or information from each document of the set of documents under control of the trained model;
      standardize the extracted data or information from each document; and
      provide the standardized extracted data or information to the user.
12. A non-transitory computer readable medium containing a set of computer-executable instructions that when executed by one or more programmed electronic processors, cause the processors to:
   receive a set of inputs from a user for training a model;
   generate and present to the user an evaluation of the expected accuracy of a model trained based on the user inputs;
   assist the user to select a prompt or language model for the model trained based on the user inputs;
   assist the user to generate a setting for the model trained based on the user inputs by evaluating an impact of a change to one or more of a system prompt, a user instruction, a RAG setting, or a choice or setting for the language model;
   enable the user to execute the trained model against a set of documents;
   extract data or information from each document of the set of documents under control of the trained model;
   standardize the extracted data or information from each document; and
   provide the standardized extracted data or information to the user.

In some embodiments, certain of the methods, models, processes, or functions disclosed herein may be embodied in the form of a trained neural network or other form of model derived from a machine learning algorithm. The neural network or model may be implemented by the execution of a set of computer-executable instructions and/or represented as a data structure. The instructions may be stored in (or on) a non-transitory computer-readable medium and executed by a programmed processor or processing element. The set of instructions may be conveyed to a user through a transfer of instructions or an application that executes a set of instructions over a network (e.g., the Internet). The set of instructions or an application may be utilized by an end-user through access to a SaaS platform, self-hosted software, on-premise software, or a service provided through a remote platform.

In general terms, a neural network may be viewed as a system of interconnected artificial "neurons" or nodes that exchange messages between each other. The connections have numeric weights that are "tuned" during a training process, so that a properly trained network will respond correctly when presented with an image, pattern, or set of data. In this characterization, the network consists of multiple layers of feature-detecting "neurons", where each layer has neurons that respond to different combinations of inputs from the previous layers.

Training of a network is performed using a "labeled" dataset of inputs in an assortment of representative input patterns (or datasets) that are associated with their intended output response. Training uses general-purpose methods to iteratively determine the weights for intermediate and final feature neurons. In terms of a computational model, each neuron calculates the dot product of inputs and weights, adds a bias, and applies a non-linear trigger or activation function (for example, using a sigmoid response function).

Machine learning (ML) is used to analyze data and assist in making decisions in multiple industries. To benefit from using machine learning, a machine learning algorithm is applied to a set of training data and labels to generate a "model" which represents what the application of the algorithm has "learned" from the training data. Each element (or example) in the form of one or more parameters, variables, characteristics, or "features" of the set of training data is associated with a label or annotation that defines how the element should be classified by the trained model. A machine learning model can predict or infer an outcome based on the training data and labels and be used as part of decision process. When trained, the model will operate on a new element of input data to generate the correct label or classification as an output.

The software components, processes, or functions disclosed and/or described in this application may be implemented as software code to be executed by a processor using a suitable computer language such as Python, Java, JavaScript, C, C++, or Perl using conventional or object-oriented techniques. The software code may be stored as a series of instructions or commands in (or on) a non-transitory computer-readable medium, such as a random-access memory (RAM), a read only memory (ROM), a magnetic medium such as a hard-drive, or an optical medium such as a CD-ROM. In this context, a non-transitory computer-readable medium is a medium suitable for the storage of data or an instruction set aside from a transitory waveform. Such computer readable medium may reside on or within a single computational apparatus and may be present on or within different computational apparatuses within a system or network.

According to one example implementation, the term processing element or processor, as used herein, may be a central processing unit (CPU), or conceptualized as a CPU (such as a virtual machine). In this example implementation, the CPU or a device in which the CPU is incorporated may be coupled, connected, and/or in communication with one or more peripheral devices, such as a display. In another example implementation, the processing element or processor may be incorporated into a mobile computing device, such as a smartphone or tablet computer.

The non-transitory computer-readable storage medium referred to herein may include a number of physical drive units, such as a redundant array of independent disks (RAID), a flash memory, a USB flash drive, an external hard disk drive, thumb drive, pen drive, key drive, a High-Density Digital Versatile Disc (HD-DV D) optical disc drive, an internal hard disk drive, a Blu-Ray optical disc drive, or a Holographic Digital Data Storage (HDDS) optical disc drive, synchronous dynamic random access memory (SDRAM), or similar devices or forms of memories based on similar technologies. Such computer-readable storage media allow the processing element or processor to access computer-executable process steps and application programs, stored on removable and non-removable memory media, to off-load data from a device or to upload data to a device. As mentioned, with regards to the embodiments disclosed and/or described herein, a non-transitory computer-readable medium may include a structure, technology, or method apart from a transitory waveform or similar medium.

Example embodiments of the disclosure are described herein with reference to block diagrams of systems, and/or flowcharts or flow diagrams of functions, operations, processes, or methods. One or more blocks of the block diagrams, or one or more stages or steps of the flowcharts or flow diagrams, and combinations of blocks in the block diagrams and combinations of stages or steps of the flowcharts or flow diagrams may be implemented by computer-executable program instructions. In some embodiments, one or more of the blocks, or stages or steps may not necessarily need to be performed in the order presented or may not necessarily need to be performed at all.

The computer-executable program instructions may be loaded onto a general-purpose computer, a special purpose computer, a processor, or other programmable data processing apparatus to produce a specific example of a machine. The instructions that are executed by the computer, processor, or other programmable data processing apparatus create means for implementing one or more of the functions, operations, processes, or methods disclosed and/or described herein. The computer program instructions may be stored in (or on) a computer-readable memory that may direct a computer or other programmable data processing apparatus to function in a specific manner, such that the instructions stored in (or on) the computer-readable memory produce an article of manufacture including instruction means that when executed implement one or more of the functions, operations, processes, or methods disclosed and/or described herein.

While embodiments of the disclosure have been described in connection with what is presently considered to be the most practical approach and technology, the embodiments are not limited to the disclosed implementations. Instead, the disclosed implementations are intended to include and cover modifications and equivalent arrangements included within the scope of the appended claims. Although specific terms are employed herein, they are used in a generic and descriptive sense only and not for purposes of limitation.

This written description uses examples to describe one or more embodiments of the disclosure, and to enable a person skilled in the art to practice the disclosed approach and technology, including making and using devices or systems and performing the associated methods. The patentable scope of the disclosure is defined by the claims, and may include other examples that occur to those skilled in the art. Such other examples are intended to be within the scope of the claims if they have structural and/or functional elements that do not differ from the literal language of the claims, or if they include structural and/or functional elements with insubstantial differences from the literal language of the claims.

All references, including publications, patent applications, and patents, cited herein are hereby incorporated by reference to the same extent as if each reference was individually and specifically indicated to be incorporated by reference and/or was set forth in its entirety herein.

The use of the terms "a" and "an" and "the" and similar references in the specification and in the claims are to be construed to cover both the singular and the plural, unless otherwise indicated herein or clearly contradicted by context. The terms "having," "including," "containing" and similar references in the specification and in the claims are to be construed as open-ended terms (e.g., meaning "including, but not limited to,") unless otherwise noted.

Recitation of ranges of values herein are intended to serve as a shorthand method of referring individually to each separate value inclusively falling within the range, unless otherwise indicated herein, and each separate value is incorporated into the specification as if it were individually recited herein. Method steps or stages disclosed and/or described herein may be performed in any suitable order unless otherwise indicated herein or clearly contradicted by context.

The use of examples or exemplary language (e.g., "such as") herein, is intended to illustrate embodiments of the disclosure and does not pose a limitation to the scope of the claims unless otherwise indicated. No language in the specification should be construed as indicating any non-claimed element as essential to each embodiment of the disclosure.

As used herein (i.e., the claims, figures, and specification), the term "or" is used inclusively to refer items in the alternative and in combination.

Different arrangements of the elements, structures, components, or steps illustrated in the figures or described herein, as well as components and steps not shown or described are possible. Similarly, some features and sub-combinations are useful and may be employed without reference to other features and sub-combinations. Embodiments have been described for illustrative and not for restrictive purposes, and alternative embodiments may become apparent to readers of the specification. Accordingly, the disclosure is not limited to the embodiments described in the specification or depicted in the figures, and modifications may be made without departing from the scope of the appended claims.

## Claims

1. A method for enabling a user to execute a query over a set of documents, comprising:
receiving a set of inputs from a user for training a model;
generating and presenting to the user an evaluation of the expected accuracy of a model trained based on the user inputs;
assisting the user to select a prompt or language model for the model trained based on the user inputs;
assisting the user to generate a setting for the model trained based on the user inputs by evaluating an impact of a change to one or more of a system prompt, a user instruction, a RAG setting, or a choice or setting for the language model;
enabling the user to execute the trained model against a set of documents;
extracting data or information from each document of the set of documents under control of the trained model;
standardizing the extracted data or information from each document; and
providing the standardized extracted data or information to the user.

2. The method of claim 1, further comprising presenting the generated setting to the user and receiving a selection of the setting from the user.

3. The method of claim 1, further comprising storing the standardized extracted data or information for later retrieval.

4. The method of claim 1, wherein providing the standardized extracted data or information to the user further comprises presenting a table, chart, or dashboard to the user.

5. The method of claim 1, wherein the received inputs comprise one or more of:
what field the user wants to populate in an output;
what documents to include in the set of documents; and
one or more instructions that indicate the task the user is asking the trained model to perform.

6. The method of claim 1, wherein generating and presenting to the user an evaluation of the expected accuracy of a model trained based on the user inputs further comprises presenting to the user:
a document in the selected set of documents;
the model's output when executed against the presented document in response to the user's inputs; and
a tool to enable the user to indicate that the model's output is either correct, incorrect, or to be skipped.

7. The method of claim 6, wherein if the user indicates the model output is correct, then a next document is presented to the user for evaluation, and if the user indicates the model output is incorrect, then the user is asked to provide the correct answer and optionally provide an explanation for why the model's answer is incorrect.

8. The method of claim 7, wherein if the model output is incorrect, the method further comprises receiving from the user an indication of where the correct output is located in a document.

9. The method of claim 1, wherein standardizing the outputs of the executed model further comprises executing parsing logic that operates to separate the extracted data or information from a longer response and if necessary, standardize it into a structured form of data.

10. The method of claim 1, wherein assisting the user to select a prompt or language model for the model trained based on the user inputs further comprises executing the model using a plurality of prompts or language models to determine a prompt or language model that provides an improved performance.

11. A system for enabling a user to execute a query over a set of documents, comprising:
one or more electronic processors configured to execute a set of computer-executable instructions; and
a non-transitory computer-readable medium including the set of computer-executable instructions, wherein when executed, the instructions cause the one or more electronic processors to
receive a set of inputs from a user for training a model;
generate and present to the user an evaluation of the expected accuracy of a model trained based on the user inputs;
assist the user to select a prompt or language model for the model trained based on the user inputs;
assist the user to generate a setting for the model trained based on the user inputs by evaluating an impact of a change to one or more of a system prompt, a user instruction, a RAG setting, or a choice or setting for the language model;
enable the user to execute the trained model against a set of documents; extract data or information from each document of the set of documents under control of the trained model;
standardize the extracted data or information from each document; and
provide the standardized extracted data or information to the user.

12. The system of claim 11, wherein the instructions further cause the one or more electronic processors to present the generated setting to the user and receive a selection of the setting from the user.

13. The system of claim 11, wherein the instructions further cause the one or more electronic processors to store the standardized extracted data or information for later retrieval.

14. The system of claim 11, wherein the instructions further cause the one or more electronic processors to provide the standardized extracted data or information to the user as a table, chart, or dashboard.

15. The system of claim 11, wherein the received inputs comprise one or more of:
what field the user wants to populate in an output;
what documents to include in the set of documents; and
one or more instructions that indicate the task the user is asking the trained model to perform.

16. The system of claim 11, wherein generating and presenting to the user an evaluation of the expected accuracy of a model trained based on the user inputs further comprises presenting to the user:
a document in the selected set of documents;
the model's output when executed against the presented document in response to the user's inputs; and
a tool to enable the user to indicate that the model's output is either correct, incorrect, or to be skipped.

17. The system of claim 11, wherein if the user indicates the model output is correct, then a next document is presented to the user for evaluation, and if the user indicates the model output is incorrect, then the user is asked to provide the correct answer and optionally provide an explanation for why the model's answer is incorrect.

18. The system of claim 11, wherein if the model output is incorrect, the instructions further cause the one or more electronic processors to receive from the user an indication of where the correct output is located in a document.

19. The system of claim 11, wherein standardizing the outputs of the executed model further comprises executing parsing logic that operates to separate the extracted data or information from a longer response and if necessary, standardize it into a structured form of data.

20. A non-transitory computer readable medium containing a set of computer-executable instructions that when executed by one or more programmed electronic processors, cause the processors to:
receive a set of inputs from a user for training a model;
generate and present to the user an evaluation of the expected accuracy of a model trained based on the user inputs;
assist the user to select a prompt or language model for the model trained based on the user inputs;
assist the user to generate a setting for the model trained based on the user inputs by evaluating an impact of a change to one or more of a system prompt, a user instruction, a RAG setting, or a choice or setting for the language model;
enable the user to execute the trained model against a set of documents;
extract data or information from each document of the set of documents under control of the trained model;
standardize the extracted data or information from each document; and
provide the standardized extracted data or information to the user.
